# EUROPEAN PATENT SPECIFICATION

(11) **EP 3 989 646 B1**
(45) Date of publication and mention of the grant of the patent: **20.08.2025**
(21) Application number: 20203313.0
(22) Date of filing: 22.10.2020
(51) Int. Cl.: H04W 52/02

(54) **SIDELINK DISCONTINUOUS RECEPTION COMMUNICATIONS**
DISKONTINUIERLICHE SIDELINK-EMPFANGSKOMMUNIKATION
COMMUNICATIONS DE RÉCEPTION DISCONTINUE DE LIAISON LATÉRALE

(43) Date of publication of application: 27.04.2022
(73) Proprietor: Nokia Technologies Oy, 02610 Espoo (FI)
(72) Inventor: KIILERICH PRATAS, Nuno Manuel, 9260 Gistrup (DK); PANZNER, Berthold, 83607 Holzkirchen (DE); WILDSCHEK, Torsten, Gloucester, GL4 5TW (GB)
(74) Representative: Mudge, Kevin

(56) References cited:
- EP-A1- 3 500 028
- WO-A1-2019/032280
- US-A1- 2017 245 319

## Description

### FIELD

The following disclosure relates to the field of mobile communication networks, or more particularly relates to systems, apparatuses, and methods for enhancing sidelink discontinuous reception communications between mobile devices.

### BACKGROUND

LTE sidelink (SL) and New Radio (NR) SL have been standardized to support proximity service (ProSe), e.g. public safety and vehicle-to-everything (V2X) communications in 3GPP. In 3GPP, SL is used to provide a wider coverage of commercial use cases.

Discontinuous reception (DRX) enables mobile devices, user equipments (UEs) with battery constraint to perform SL operations in a power efficient manner. Sidelink communication is designed based on the assumption of *"always-on"* when a respective UE operates in a sidelink communication, e.g. as can be done by UEs installed in vehicles with sufficient battery capacity. Solutions for power saving are therefore beneficial for vulnerable road users (VRUs) in V2X use cases and for UEs in public safety and commercial use cases where power consumption in the UEs is to be minimized.

Thus, DRX is introduced for SL communication referred to as SL DRX communication and can be used for broadcast, groupcast, and unicast service(s). On- and off-durations are defined and specify the corresponding UE procedure. Further, mechanism(s) aiming to align SL DRX wake-up time among the UEs communicating with each other are specified. Other mechanism(s) aiming to align SL DRX wake-up time with Uu DRX wake-up time for an in-coverage UE are also specified.

In general, SL communications between UEs e.g. over PC5, as described in e.g. 3GPP standard for LTE and for NR, are based on the principle of transmitter (e.g. Tx UE) oriented one-to-many broadcast. This means that in principle there is no need for a connection setup for SL communication between UEs on the radio-access level, regardless of whether SL communication is for unicast, groupcast or broadcast service(s).

On one hand, a respective Tx UE transmits SL to a receiver (e.g. Rx UE) or a group of Rx UEs or all of such Rx UEs in a proximity of the respective Tx UE for transmitting SL control information (SCI) which may be used as a scheduling assignment for a SL data transmission. On the other hand, a respective Rx UE needs to keep monitoring for such scheduling assignment(s) to receive SL, at least receiving SL control information (SCI) instances and determining whether a received SCI and corresponding SL data transmission is intended for the respective Rx UE to be received or not, e.g. based on Source (SRC) and/or destination (DST) ID(s) indicated in the received SCI instances. SRC is corresponding to Tx side and DST is corresponding to Rx side. This can be applied for all casting types over SL: unicast, groupcast or broadcast.

Further, there are two modes of resource allocation, referred to as Mode 1 and Mode 2, specified for a SL transmission:
- Mode 1 is based on using scheduled resources or grants from a serving base station of a mobile communication network. This implies that a Tx UE may be in a so-called RRC CONNECTED state of the serving base station in order to get Mode 1 resources allocated.
- Mode 2 is based on autonomous allocation or selection of resources from a pre-configured Tx resource pool by a Tx UE. The resource selection in Mode 2 can be based on a simple random selection or sensing-based selection. The latter is preferred and used for normal operation while the former is used for exceptional operations or situations with a particular, pre-configured resource pool. Mode 2 can be used for a respective Tx UE being in coverage (IC) or out-of-coverage (OoC) of a serving base station; and in so-called RRC IDLE, RRC INACTIVE or RRC CONNECTED state of the respective UEs. EP3500028 A1 and WO2019/032280 A1 are examples of the prior art.

### SUMMARY OF SOME EXEMPLARY EMBODIMENTS

The introduction of DRX periods respectively cycles for SL communication may enable significant power saving, since power saving periods (DRX_OFF periods) are introduced in which the UEs of the SL communication(s) are not monitoring for any incoming allocations and/or transmissions. In other words, during these DRX_OFF periods, the respective SL UE(s) may not attempt to receive/decode any Physical Sidelink Control Channel (PSCCH) transmission(s) and/or SCI. The energy saving obtained from the introduction of the DRX periods come from such DRX_OFF period(s) since the respective UE may turn off its receiver/transceiver.

During a DRX_ON period, the respective SL UE(s) will be actively monitoring SL resource pool(s) for any detected PSCCH and the corresponding (e.g. 1st and 2nd stage) SCI, wherein such a 2nd stage SCI may be received in a Physical Sidelink Shared Channel (PSSCH). This will occur regardless if there is traffic/data or not any traffic towards the respective SL UE during the DRX_ON period. In other words, the SL UE wastes energy unnecessarily while actively monitoring the resource pool(s) even when there is no planned transmission towards the respective SL UE.

It is thus, inter alia, an object of the invention to enable for additional power saving gains in SL communication and, further, to avoid unnecessary active periods of a respective SL UE.

According to a first exemplary aspect, a method according to claim 13 is disclosed.

According to a second exemplary aspect, a method according to claim 14 is disclosed.

According to a further exemplary aspect of the invention, an apparatus according to claim 1 is disclosed.

The means of the apparatus can be implemented in hardware and/or software. They may comprise for instance at least one processor for executing computer program code for performing the required functions, at least one memory storing the program code, or both. Alternatively, they could comprise for instance circuitry that is designed to implement the required functions, for instance implemented in a chipset or a chip, like an integrated circuit. In general, the means may comprise for instance one or more processing means or processors.

According to a further exemplary aspect of the invention, an apparatus according to claim 9 is disclosed.

The above-disclosed apparatus according to any aspect of the invention may be a module or a component for a device, for example a chip. Alternatively, the disclosed apparatus according to any aspect of the invention may be a device, for instance a server or server cloud. The disclosed apparatus according to any aspect of the invention may comprise only the disclosed components, for instance means, processor, memory, or may further comprise one or more additional components.

According to a further exemplary aspect of the invention, a system according to claim 15 is disclosed.

In the following, exemplary features and exemplary embodiments of all aspects will be described in further detail.

A mobile communication network, as used herein, refers to a network that can be utilized by one or more mobile devices. Such a mobile communication network typically operates in accordance with a given standard or specification which may set out what the various entities (e.g. the one or more mobile devices, one or more base stations respectively radio access nodes (e.g. gNBs) associated with the mobile communication network, or one more core network entities/functions) are permitted to do and how that should be achieved. Communication protocols and/or communication parameters which shall be used for the connection are also typically defined. Examples of standardized radio access technologies comprise GSM (Global System for Mobile), EDGE (Enhanced Data for GSM Evolution), Radio Access Networks (GERAN), Universal Terrestrial Radio Access Networks (UTRAN), evolved UTRAN (E-UTRAN), fifth generation (5G) New Radio (NR), to name but a few non-limiting examples. An example of standardized communication system architecture is Long-term Evolution (LTE) of the Universal Mobile Telecommunications Systems (UMTS) Radio Access Technology. LTE is standardized by the 3^{rd} Generation Partnership Project (3GPP). The LTE employs E-UTRAN access. Further developments are referred to as LTE Advanced (LTE-A), 5G, or 5G+, and/or NR communication standard.

Such an apparatus (e.g. a mobile device) according to the first and/or to the second exemplary aspect, as used herein, may for instance be portable (e.g. weigh less than 1, 0.8, 0.6, 0.4, 0.2, 0.1 kg, or less), like a mobile phone, personal digital assistance device, computer, laptop computer, a UE, an (I)IoT device, or a combination thereof as non-limiting examples. The apparatus may for instance comprise or be connectable to a display for displaying information. The apparatus may for instance comprise or be connectable to means for outputting and/or capturing sounds, e.g. in the form of spoken commands or information. The apparatus may for instance comprise or be connectable to one or more sensors for determining the devices position, such as for instance a GNSS receiver, in the form of a GPS receiver. The apparatus may for instance comprise or be connectable to one or more sensors, e.g. in the form of an accelerometer and/or a gyroscope and/or magnetometer and/or barometer for gathering (e.g. measuring) further information, such as motion sensor data. The apparatus may for instance comprise or be connectable to a receiver and/or a transmitter (e.g. a transceiver) for receiving and/or sending information, e.g. via a SL or Uu interface.

The methods according to all exemplary aspects may enable that a respective SL Rx UE (e.g. apparatus according to the first exemplary aspect) is informed/indicated if there will be a transmission or not in a current and possibly one or more upcoming respectively subsequent active SL DRX periods (e.g. DRX_ON periods) of the respective SL Rx UE. Then, the respective SL Rx UE can e.g. enter an inactive state during respectively in the current and possibly one or more upcoming active SL DRX periods of the apparatus according to the first exemplary aspect if no data/traffic is expected. If SL data/traffic is to be expected, then the apparatus according to the first exemplary aspect can monitor for an allocation of the SL data/traffic.

The resource pool for SL transmission and reception, also referred to as the SL resource pool, may follow a system frame structure and synchronization of the serving network. SL resource pool may provide one or more transmission slots in a time domain and/or one or more sub-channels in a frequency domain usable to transmit respectively receive the at least one symbol.

The at least one symbol may be an Orthogonal Frequency Division Multiplexing (OFDM) symbol. The SL resource pool may be a licensed pool in a licensed band or an unlicensed pool in an unlicensed band available for SL transmissions. The SL resource pool may comprise one or more sub-channels, e.g. associated or located over a (pre-) configured frequency range (spectrum). The SL resource pool may span a configured number of Physical Resource Blocks (PRBs). The SL resource pool may comprise one or more transmission slots, e.g. associated with or located over a (pre-) configured time domain. Such a SL resource pool may be applied for (e.g. all) SL channels, e.g. including one or more of PSCCH, PSSCH and/or Physical Sidelink Feedback Channel (PSFCH). The scale of resource resolution on the SL resource pool may be different in at least a frequency domain of the PSCCH, PSSCH and/or PSFCH. The SL resource or SL resource unit may be radio resource, e.g. defined by a certain time and/or frequency domain, e.g. a certain transmission slot and/or a certain sub-channel of at least one carrier of the mobile communication network. The at least one symbol may be a particular transmission instance within such transmission slot(s) of the SL resource pool. A plurality (e.g. at least two) of such symbols may be spaced apart, e.g. by being transmitted in the same transmission slot but in different sub-channels of the SL resource pool, or being transmitted in the same sub-channel but in different transmission slots in a time domain of the SL resource pool, to name but one non-limiting example.

The at least one symbol may be received from an apparatus according to the second exemplary aspect. The at least one symbol may be received directly, e.g. from an apparatus according to the second exemplary aspect. Additionally or alternatively, the at least one symbol may be received via a relayed (e.g. SL) communication.

The at least one symbol may be received in an active SL DRX period of a SL discontinuous reception (DRX) communication of the apparatus according to the first exemplary aspect. Such an active SL DRX period may be part of DRX enabling the apparatus to save energy e.g. due to turning its receiver and/or transceiver off when it is not needed (e.g. no traffic/data is expected to be received). Such an active SL DRX period may also be referred to as DRX_ON period of a SL DRX communication. Such an active SL DRX period respectively DRX_ON period is understood to be the period of time (period of contiguous slots) where a SL Rx UE (e.g. the apparatus according to the first exemplary aspect) is actively monitoring one or more sub-channels for incoming data/traffic for the SL Rx UE. In such an active SL DRX period, the apparatus according to the first exemplary aspect may be in an active state or in an inactive state. In the active state in the active SL DRX period, the apparatus according to the first exemplary aspect can monitor the SL resource pool for incoming SL data/traffic. In the inactive state in the active SL DRX period, the apparatus according to the first exemplary aspect may e.g. undertake measure to save energy, e.g. by turning its receiver/transceiver off, to name but one non-limiting example.

Accordingly, an inactive SL DRX period respectively DRX_OFF is understood to correspond to the period of time (period of contiguous slots) in which a respective SL Rx UE is not monitoring the transmission slots in the SL resource pool and checking for the indication, and thus may switch off its receiver and/or transceiver. Active SL DRX period and inactive SL DRX period of the apparatus according to the first exemplary aspect may be configured by the mobile communication network. Active SL DRX period and inactive SL DRX period of the apparatus according to the first exemplary aspect may alternate.

The indication may represent that either data is expected in the active SL DRX period and possibly in the one or more subsequent active SL DRX periods, or the indication may represent that no data is to be expected in the active SL DRX period and possibly in the one or more subsequent active SL DRX periods. The indication may be a signal, in particular a SL-DFS. More details with regard to the SL-DFS are disclosed below.

According to an exemplary embodiment of all exemplary aspects, the indication is a sidelink, SL, Discontinuous Reception, DRX, ON Filtering Signal, SL-DFS, e.g. being represented by a wake-up signal.

In this way, the indication may represent a wake-up signal, e.g. denoted as SL DRX_ON Filtering Signal (SL-DFS), that may allow a SL Tx UE (e.g. apparatus according to the second exemplary aspect) to indicate to a specific Rx UE (e.g. apparatus according to the first exemplary aspect) whether there is intended data/traffic to the SL Rx UE in the Rx UE's current active SL DRX period respectively DRX_ON period allocated (e.g. the period of time that the SL Rx UE is expected to monitor the SL resource pool for one or more potential transmissions), and possibly in one or more subsequent active SL DRX periods respectively DRX_ON periods.

Further, the indication (e.g. a SL-DFS, e.g. in a SL resource unit) may be configured to the apparatus according to the first exemplary aspect. In case such a SL resource unit comprises the indication (e.g. the SL-DFS), it is also referred to as SL-DFS resource unit. For instance, the allocation of the SL-DFS resource unit may be centric to the apparatus (e.g. SL Rx UE). Thus, a specific SL-DFS resource unit may be allocated to a specific SL Rx UE. Alternatively or additionally, there can be example embodiments in which a group of apparatuses according to the first exemplary aspect (e.g. SL Rx UEs) may be allocated to the same SL-DFS resource unit, e.g. via a groupcast group.

Such a respective SL-DFS resource unit may be shared by (e.g. at least two) apparatuses according to the first exemplary aspect. Then, it may be beneficial that an additional informative payload (or different cyclic shifts of the indication (e.g. SL-DFS) is associated with the different apparatuses according to the first exemplary aspect (e.g. SL Rx UEs). This may be done, e.g. by sending further filters/indications to the respective apparatus(es) which may enable that a certain UE or certain UEs in that group can be awoken. In the case of SL groupcast, such an assignment of an opportunity for a SL DRX communication for the group may ensure that all UEs in the group are in their respective active SL DRX periods respectively DRX_ON periods. A certain SL Rx UE may be assigned a specific Zadoff-Chu root sequence index. A respective SL Tx UE that intends to communicate with the certain SL Rx UE may use this root sequence index, and a dedicated cyclic shift of this Zadoff-Chu sequence to address the indication to the certain SL Rx UE.

The indication may be represented by or be a part of a SL resource unit comprising one or more resources via which the at least one symbol can be transmitted/received. A respective SL resource unit, as used herein, refers to resource(s) contained within a sub-channel (e.g. minimum resource allocation in frequency) and a slot (e.g. minimum resource allocation in time).

The indication may be apparatus specific. Alternatively, the at least one SL resource unit may comprise a plurality (e.g. at least two) of indications for a plurality of apparatuses, e.g. according to the first exemplary aspect.

If no indication is received, then the apparatus according to the first exemplary aspect may assume that there is no SL data/traffic. For instance, the apparatus according to the first exemplary aspect may skip the active SL DRX period and possibly one or more subsequent active SL DRX periods. The apparatus according to the first exemplary aspect may enter the inactive state in the active period and possibly one or more subsequent active SL DRX periods, e.g. until a next/upcoming active SL DRX period for a/the SL DRX communication where it is checked again whether an indication is received.

The indication may represent that SL data can be expected by the apparatus according to the first exemplary aspect in the (e.g. current or upcoming) active SL DRX period in which the at least one symbol is received. Further, the indication may represent that SL data can be expected by the apparatus according to the first exemplary aspect in one or more subsequent active SL DRX periods. For instance, the indication may also represent that no data is to be expected in the (e.g. current or upcoming) active SL DRX period and possibly in the one or more subsequent active SL DRX periods. This may allow the apparatus according to the first exemplary aspect to not enter such one or more subsequent active SL DRX period(s), e.g. as derivable by apparatus according to the first exemplary aspect based on the indication, e.g. at all. For instance, then, instead of e.g. a transition into DRX_ON and checking in the active SL DRX period if there is data/traffic to be expected, the apparatus according to the first exemplary aspect may skip the respective active SL DRX period. The amount of one or more subsequent active SL DRX periods in which the apparatus according to the first exemplary aspect may expect data or may not expect data may be limited by a pre-defined or configured maximum number of upcoming active SL DRX periods (e.g. DRX_ON periods). This may be configured e.g. by a received (e.g. SL DRX) configuration, e.g. received by the apparatus according to the first exemplary aspect from a mobile communication network, e.g. a serving base station of the apparatus.

The at least one symbol may be checked or caused to be checked for the indication (e.g. SL-DFS). Thus, it may be checked or caused to be checked whether such an indication is comprised or included by the at least one symbol.

Based on a result of the checking, the apparatus according to the first exemplary aspect may enter or transition to an inactive state in the active SL DRX period and possibly the one or more subsequent active SL DRX periods in which the apparatus may turn-off its receiver to save/reduce energy consumption, if the indication represents that no SL data is to be expected in the (e.g. current) active SL DRX period and possibly the one or more subsequent active SL DRX periods.

If, however, the indication represents that SL data is to be expected, thus should be received by the apparatus according to the first exemplary aspect, the SL data may be received as specified by the indication in the (e.g. current) active SL DRX period and/or the one or more subsequent active SL DRX periods, accordingly. After the SL data is correctly received, the apparatus according to the first exemplary aspect may enter the inactive SL DRX period (also referred to as DRX_OFF period), e.g. until the next/upcoming active SL DRX period (e.g. DRX_ON period). Alternatively, the apparatus according to the first exemplary aspect may enter the inactive state at least during the one or more subsequent active SL DRX periods (e.g. DRX_ON periods) in which it is expected that no SL data/traffic is to be received. The indication may further represent that after the SL data is received, there is not any further SL data to be expected by the apparatus in one or more subsequent active SL DRX periods. In this case, the apparatus according to the first exemplary aspect may enter the inactive state in the one or more subsequent active SL DRX periods for the amount of time as specified by the one or more subsequent active SL DRX periods (not entered by the apparatus) in which it is expected that no SL data/traffic is to be received.

If the checking, if such an indication is comprised by the at least one symbol, results e.g. in the indication e.g. being not decodable, or the indication not being detectable within the at least one symbol, the inactive state may not be entered. Thus, the apparatus according to the first exemplary aspect may stay in or transition to the active SL DRX period. Further, in this case, the apparatus may monitor one or more PSCCHs of the SL resource pool and then e.g. enter the inactive SL DRX period in case within the one or more monitored PSCCHs, there is no allocation of a transmission of SL data allocated (e.g. via a SCI) for the apparatus. Otherwise, in case there is SL data allocated and announced (e.g. by a SCI) to the apparatus according to the first exemplary aspect in the one or more PSCCHs, the apparatus according to the first exemplary aspect may accordingly receive the SL data, e.g. via one or more resources of the SL resource pool.

The inactive state in a current active SL DRX period may be entered in case the indication represents that upcoming traffic respectively SL data is irrelevant for the apparatus, as may be determined based on the checking.

In this way, it may be allowed that SL Rx UEs can save energy by avoiding unnecessary active SL DRX periods and unnecessary checking is SL data/traffic is allocated requiring to enter or transition to an active state.

According to an exemplary embodiment of the first exemplary aspect, the at least one symbol is received in at least one sub-channel and one transmission slot of the SL resource pool.

According to an exemplary embodiment of the second exemplary aspect, the at least one symbol is transmitted in at least one sub-channel and one transmission slot of the SL resource pool.

As disclosed above, the at least one symbol comprising the indication may be part of one or more SL-DFS sequences. Such one or more SL-DFS sequences may be transmitted within one or more symbols of the SL resource pool, e.g. by the apparatus according to the second exemplary aspect. Correspondingly, they may then be received by the apparatus according to the first exemplary aspect. Further, such at least one symbol, or such one or more SL-DFS sequences may be transmitted within a SL resource unit of the SL resource pool. Correspondingly, they may then be received by the apparatus according to the first exemplary aspect.

The specific SL resource units that are eligible for the transmission of the SL-DFS may be indicated in a RRC configuration (e.g. message) that may be associated with the SL resource pool.

According to an exemplary embodiment of all exemplary aspects, the transmission slot is configured with a slot format or a SL resource type, from which at least one particular symbol position in the transmission slot comprised (e.g. occupied) by the at least one symbol is derived.

The at least one resource contained within a sub-channel (e.g. the minimum resource allocation in frequency) and a slot (the minimum resource allocation in time) of the SL resource pool may also be referred to as SL resource unit, as disclosed above. Further, the term slot format or SL resource type may be understood to describe different configurations that affect the way the SL resource unit is used in the SL resource pool.

A respective slot format or a respective SL resource type may be defined by an arrangement of the indication (e.g. SL-DFS) and further symbols within a slot and/or sub-channel.

According to an exemplary embodiment of all exemplary aspects, the indication spans a fraction of one sub-channel or one or more sub-channels of the SL resource pool in the frequency domain.

The indication may span a fraction (e.g. at least a part) of one sub-channel or one or more sub-channels in a frequency domain of the SL resource pool. Multiple indications from different apparatuses may be transmitted/received within a same sub-channel of the SL resource pool. The indications may be multiplexed in a time domain and/or in the frequency domain of the SL resource pool.

According to an exemplary embodiment of all exemplary aspects, a further indication is encoded into SL control information, SCI of a Physical Sidelink Control Channel, PSCCH, or a Physical Sidelink Shared Channel, PSSCH, in the transmission slot. Such a further indication may enable the coexistence with devices not supporting the indication, e.g. devices according to (e.g. current) legacy standard.

The further indication may represent that specific symbols in the SL resource unit are allocated for the transmission of further information associated with the indication (e.g. the SL-DFS). For instance, a new type of SL resource unit (e.g. new slot format or SL resource type) may be defined where such specific symbols in the SL resource unit of the SL resource pool can be allocated for the transmission of the SL-DFS. The further indication may enable the apparatus according to the first exemplary aspect to decode such specific symbols. For instance, if a device receiving a SCI comprising the further indication, which is not enabled to interpret the further indication, the respective device may ignore the further indication and operate according to legacy specification, to name but one non-limiting example. The at least one symbol may be placed within the SL resource unit while still allowing the remaining symbols to be used for the transmission of PSCCH/PSSCH symbols within the respective SL resource unit. This may further allow to multiplex within the same SL resource unit one (or more) indications (e.g. SL-DFS) occupying different transmission slots and/or sub-channels, or PSCCH/PSSCH and even PSFCH, wherein a respective indication of these may not necessarily be intended to the same receiver (e.g. SL Rx UE).

The further indication may be part of a new 2^{nd}-stage SCI format field in the 1^{st} state SCI, e.g. enabling backward compatibility with legacy devices. The 1^{st} stage SCI may be part of the PSCCH. The 2^{nd} stage SCI may be part of the PSSCH. The further indication may be a codepoint reserved value being encoded in the 2^{nd}-stage SCI format field of the 1^{st}-stage SCI. The further indication may enable a respective legacy device to skip decoding of the specific slot format, e.g. as introduced by the indication. The indication, as disclosed above, in contrast may not be conveyed over the PSCCH.

According to an exemplary embodiment of the first exemplary aspect, one or more remaining symbols of the transmission slot convey further traffic activity information for the SL data that is expected to be received by the apparatus during the one or more subsequent active SL DRX periods.

According to an exemplary embodiment of the second exemplary aspect, the method further comprises:
- transmitting further traffic activity information for the SL data that is expected to be transmitted by the apparatus during the one or more subsequent active SL DRX periods in one or more remaining symbols of the transmission slot.

The transmission slot may carry further wake-up information payload in one or more remaining symbols of the transmission slot, e.g. a number of active SL DRX (e.g. DRX_ON) periods during which there may be no SL data/traffic that is expected to be received from the one or more SL Tx UEs, or an expected traffic pattern for the upcoming active SL DRX (e.g. DRX_ON) period(s). In this case, e.g. the PSSCH resources of the respective transmission slot carrying the indication may be partitioned among the various Tx UEs that may transmit SL data to the apparatus according to the first exemplary aspect. The configuration may be done by means of RRC signaling.

According to an exemplary embodiment of all exemplary aspects, the indication comprises a low-correlation and/or orthogonal sequence modulated over the at least one symbol.

The indication may be a sequence. One or more of such sequences, e.g. for one or more apparatuses according to the first exemplary aspect may be comprised by the at least one symbol by utilizing such a sequence. Such (a) sequence(s) may be implemented by a Zadoff-Chu sequence or signal, or other sequence(s) or signal(s) having similar properties. Specifically, a respective sequence or signal which allows multiple transmissions to be overlapped in a time and frequency domain may be suitable. Further, a respective sequence or signal may be suitable in which a receiver or transceiver (e.g. of the apparatus according to the first exemplary aspect) can still detect an indication intended for the respective receiver. This may be enabled if the one or more indications are orthogonal (e.g. orthogonality by each transmission having a cyclic shift associated or another root sequence index for the case of Zadoff-Chu sequences).

If the indication is modulated by a Zadoff-Chu sequence so that it is allowed concurrent wake-up signaling by more than one apparatus according to the second exemplary aspect to the apparatus according to the first exemplary aspect, a specific slot format that e.g. may span one sub-channel may be used.

Further, the PSCCH for such a slot format may be left empty, or may carry 1st-stage SCI, which may comprise or include an indication of the slot format, so that a legacy UE is enabled to skip a checking for the indication (e.g. decoding) of this slot. This may allow to enhance compatibility to one or more UEs not being configured to checking the at least one symbol for the indication.

The various available root sequence indexes and/or cyclic shifts of the low-correlation/orthogonal sequence may be used to carry additional payload information, such as traffic activity information for one or more subsequent active SL DRX (e.g. DRX_ON) periods, for instance to signal the number of active SL DRX (e.g. DRX_ON) periods that shall be monitored starting from the current active SL DRX period. To do so, they may be organized into multiple (e.g. at least two) groups, and a respective group of the multiple groups may be associated with a given number of the active SL DRX periods during which SL data/traffic is to be expected.

According to an exemplary embodiment of all exemplary aspects, one or more symbols of the SL resource unit represent the indication, wherein one or more remaining symbols of the SL resource pool are associated with (e.g. a transmission of) an informative payload associated with the indication.

A respective SL resource unit type (or slot format) may be defined in which a specific symbol or specific symbols within the SL resource unit are reserved for the transmission of the indication(s), while the remaining symbol(s) may be dedicated for PSCCH/PSSCH associated with a transmission of an informative payload. The informative payload may be used by the transmitter (e.g. apparatus according to the second exemplary aspect) to indicate to the intended receiver (e.g. apparatus according to the first exemplary aspect) e.g. further details about the SL data respectively traffic that will be present or be transmitted (from the transmitter to the receiver) or received (by the receiver from the transmitter) in the (e.g. current) active SL DRX period and/or in one or more (e.g. upcoming) active SL DRX periods. In some example embodiments, further traffic activity information may be within such an informative payload and may indicate a transmission behavior of the apparatus according to the second exemplary aspect. The transmission behavior may be indicated for one or more subsequent active SL DRX periods (e.g. over multiple successive DRX_ON periods).

In an example embodiment, the indication (e.g. SL-DFS) with associated informative payload may be comprised by a respective SL resource unit without requiring an explicit SL-DFS symbol representing that the informative payload is comprised. As disclosed above, such an explicit SL-DFS symbol may be represented by a respective Zadoff-Chu sequence or signal. For instance, the PSCCH may further comprise, e.g. in a 1st stage SCI, an indication that the respective SL resource unit comprises (e.g. carries) the associated informative payload. Further, this indication may be provided in a 2nd stage SCI. However, as it is expected that the apparatus according to the first exemplary aspect (e.g. SL Rx UE) can in principle be receiving the at least one symbol comprising the indication (e.g. SL-DFS) from multiple peers (e.g. SL Tx UE; apparatus according to the second exemplary aspect) or even a base station (e.g. gNB; apparatus according to the second exemplary aspect), then the inclusion of the indication may ensure that the apparatus according to the first exemplary aspect (e.g. SL Rx UE) is able to check or cause the checking for (e.g. the presence of) the indication.

According to an exemplary embodiment of all exemplary aspects, the indication is signaled at or near a start of the active SL DRX period.

In order to maximize energy savings of the apparatus according to the first exemplary aspect, the indication or opportunities to comprise the indication(s) may be at or e.g. very near to the start/beginning of the active SL DRX period (e.g., first slot of an active SL DRX period) or even be indicating the start of the respective active SL DRX period (e.g. DRX_ON period).

According to an exemplary embodiment of the first exemplary aspect, the method further comprises:
- monitoring at least one downlink carrier for the indication based, at least in part, on the checking.

For instance, the indication may initiate the apparatus according to the first exemplary aspect to monitor the downlink carrier. Then, e.g. informative payload associated with the indication may be provided in the downlink carrier. The provision of the informative payload may then be initiated or be performed by the network, e.g. a base station (e.g. apparatus according to the second exemplary aspect) of the mobile communication network and after the apparatus of the first exemplary aspect has begun to monitor the at least one downlink carrier.

According to an exemplary embodiment of the first exemplary aspect, the apparatus is a user equipment, UE, being a target device of the SL data.

According to an exemplary embodiment of the first exemplary aspect, the method further comprises:
- receiving a configuration indicative of at least one SL DRX information;
wherein the active SL DRX period is a SL DRX_ON period and is entered based, at least in part, on the configuration.

To configure or enable the apparatus according to the first exemplary aspect to check or cause the checking for the indication, e.g. a provisioned configuration may be utilized. Such a configuration may be obtained (e.g. received) from a mobile communication network, e.g. a serving base station (e.g. apparatus according to the second exemplary aspect) for the apparatus according to the first exemplary aspect. Alternatively, such a configuration may also be pre-configured in the apparatus. The SL DRX information may be provided by the mobile communication network setting up one or more parameters to enable the apparatus according to the first and/or the second exemplary aspect (in case it is a SL Tx UE) to set up DRX periods.

According to an exemplary embodiment of the first exemplary aspect, the method further comprises:
- providing (e.g. via a special SCI) a timing for a next indication if SL data is expected to be received to one or more further (e.g. peer) UEs, e.g. in the proximity of the apparatus.

Such a timing may be comprised by a SCI, or by a specially defined SCI. With such a timing, the apparatus according to the first exemplary aspect may be enabled to enter or transition to the inactive state in a current active SL DRX period and possibly one or more subsequent active SL DRX periods. The apparatus according to the first exemplary aspect may be enabled to stay inactive or in the inactive state until the next active SL DRX period in which SL data is to be expected, or at least as long as the apparatus knows based on the indication that until then that no SL data is to be expected. The timing may represent a certain Sub-Frame Number (SFN), or may be a timer, or may represent an amount of SL DRX intervals/cycles, to name but a few non-limiting examples.

The at least one symbol may be transmitted from the apparatus according to the second exemplary aspect to the apparatus according to the first exemplary aspect. The at least one device may be the apparatus according to the first exemplary aspect, e.g. a SL Rx UE. The respective active SL DRX period in which the at least one symbol is transmitted is the active SL DRX period of the at least one device. Correspondingly, the one or more subsequent SL DRX periods are the one or more subsequent active periods of the at least one device, e.g. the apparatus according to the first exemplary aspect.

The transmitted indication represents if SL data is expected to be transmitted in an active SL DRX period and possibly one or more subsequent active SL DRX periods to the apparatus according to the first exemplary aspect. After the indication is transmitted, the SL data may be provided in line with the indication to the at least one device. Thus, the SL data may be provided in a current active SL DRX period in which the transmitted at least one symbol comprising the indication is received by the apparatus according to the first exemplary aspect, and/or in one or more subsequent active SL DRX periods of the apparatus according to the first exemplary aspect that receives the transmitted at least one symbol comprising the indication. Alternatively, the SL data may be caused to be provided in line with the indication to the at least one device, e.g. in case the method according to the second exemplary aspect is performed and/or controlled by a base station. Then, for instance, a respective signaling may be provided from the base station e.g. to a SL Tx UE so that the SL Tx UE can transmit SL data/traffic to the apparatus according to the first exemplary aspect to which the apparatus according to the second exemplary aspect transmitted the at least one symbol comprising the indication.

The indication (e.g. SL-DFS) may be indicated in or be comprised by the (e.g. same) SL-DFS resource unit by both a base station and by one or more peer UEs of the apparatus according to the first exemplary aspect. The apparatus according to the first exemplary aspect may perform and/or control a selection which indication of SL data to be transmitted is considered, e.g. with a priority setting, to name but one non-limiting example. This may be specified in the configuration that is provided to the apparatus according to the first exemplary aspect. Further, this may be provided to the apparatus according to the first exemplary aspect via a configuration associated with the SL resource pool. Additionally, in a case in which the SL communication operates in a dedicated carrier (e.g. a respective base station may not transmit on that carrier), then this so-called mobile communication network (NW)-initiated SL-DFS may be sent instead in a separate downlink carrier. In this case, the apparatus according to the first exemplary aspect may monitor such at least one downlink carrier, e.g. a SL dedicated carrier for SL-DFS originated by its peer UEs and/or the downlink carrier for the NW-initiated SL-DFS. In order to maximize power savings, the indication (e.g. SL-DFS) in both carriers may occur at the same time in different carriers (for multicarrier capable UEs) or sequentially in time (for single carrier capable UEs).

In an example embodiment of all exemplary aspects, after the indication is received by the apparatus according to the first exemplary aspect (e.g. a SL Rx UE), and e.g. of a SL-DFS resource unit that has been reserved to the SL Rx UE, the SL Rx UE may further inform every potential SL Tx UE (for which there was a pre-DRX alignment/coordination signaling exchange either MAC or RRC level) of where in the SL resource pool, thus, in which resource the SL-DFS resource unit may occur.

For instance, allocation of the SL-DFS resource unit to a specific SL Rx UE (or group of UEs) may be made by the mobile communication network, when the apparatus according to the second exemplary aspect (e.g. SL Rx UE) is under network coverage, either based on a request of the respective SL Rx UE or as part of the SL configuration of the SL Rx UE when connecting to the mobile communication network is done, to name but a few non-limiting examples. When the SL Rx UE is outside network coverage (or in case the network does not organize the SL-DFS resources), the SL Rx UE may reserve directly in the SL resource pool a specific SL-DFS resource unit out of valid ones (e.g. at the end of the active SL DRX period (e.g. DRX_ON period) the SL Rx UE can transmit to its peer UEs, e.g. via a special SCI, when the next SL-DFS resource unit will take place).

Additionally or alternatively, if the SL-DFS resource unit is configured by the mobile communication network, then the mobile communication network may allocate one or multiple of these SL-DFS resource units in the SL resource pool, e.g. to a respective UE. Alternatively or additionally, the indication may be associated with an UE identifier (e.g. such as the SL destination identity) or to a specific DRX pattern so that when the respective apparatus checks the at least one symbol, it can determine if the indication is intended for it or not.

In principle, the indication may be transmitted by both a base station and by one or more UEs to one (the same) target device.

According to an exemplary embodiment of the second exemplary aspect, the method further comprises:
- skipping transmitting further symbol(s) in one or more subsequent active SL DRX periods if it is known and as indicated by the indication to the apparatus according to the first exemplary aspect that there is no SL data to be transmitted in the one or more subsequent active SL DRX periods.

For instance, if a respective indication represents that no SL data is to be expected in one or more subsequent active SL DRX periods of the apparatus according to the first exemplary aspect, the apparatus according to the second exemplary aspect may skip a further transmission/signaling to the apparatus according to the first exemplary aspect. This may allow the apparatus according to the second exemplary aspect to maximize power savings e.g. due to not unnecessarily transmitting information.

According to an exemplary embodiment of the second exemplary aspect, the method further comprises:
- determining if the at least one device is suitable for receiving the indication, wherein the at least one symbol is transmitted based, at least in part, on a result of the determining.

Prior to the transmitting of the at least one symbol to the apparatus according to the first exemplary aspect, it may be determined if the apparatus according to the first exemplary aspect is suitable for receiving at least one symbol comprising the indication, e.g. if the apparatus according to the first exemplary aspect can demodulate or decode a respective indication from the at least one symbol. The determining may be done via a signaling between the apparatus according to the second exemplary aspect and the mobile communication network.

According to an exemplary embodiment of the second exemplary aspect, the apparatus is a UE having a transmission towards the at least one device (e.g. SL Rx UE, or recipient), or a base station (e.g. a gNB or eNB) of a mobile communication network having a transmission towards the at least one device or scheduling a SL transmission from another device (e.g. SL Tx UE or sender) towards the at least one device.

The features and example embodiments of the invention described above may equally pertain to the different aspects according to the present invention.

It is to be understood that the presentation of the invention in this section is merely by way of examples and non-limiting.

Other features of the invention will become apparent from the following detailed description considered in conjunction with the accompanying drawings. It is to be understood, however, that the drawings are designed solely for purposes of illustration and not as a definition of the limits of the invention, for which reference should be made to the appended claims. It should be further understood that the drawings are not drawn to scale and that they are merely intended to conceptually illustrate the structures and procedures described herein.

### BRIEF DESCRIPTION OF THE DRAWINGS

In the figures show:
- Fig. 1: a schematic block diagram of a system according to an exemplary aspect;
- Fig. 2a, b: examples of active SL DRX periods of a UE and a group of UEs;
- Fig. 3: an illustration of a DCP, used in a Uu interface of a mobile communication network;
- Fig. 4: an illustration of an indication according to an exemplary aspect;
- Fig. 5a-d: examples of potential SL resource pool configurations, as utilized by example embodiments according to all exemplary aspects;
- Fig. 6a-d: examples of SL resource units configured for respective transmission of symbols comprising the indication, as utilized by example embodiments according to all exemplary aspects;
- Fig. 7a, b: examples of different SL-DFS resource units: with PSFCH and without PSFCH;
- Fig. 8: an illustration of an example embodiment in which multiple informative payloads, with which an indication is associated, are multiplexed within a resource unit;
- Fig. 9: an illustration of an example in which activation of one cyclic shift is used so that the apparatus according to the first exemplary aspect may decode a certain sub-resource;
- Fig. 10a, b: examples of a respective start of an active SL DRX period entered by an apparatus according to the first exemplary aspect of different UEs indicated in a SL-DFS resource unit;
- Fig. 11: a flowchart showing an example embodiment of all exemplary aspects;
- Fig. 12: a flowchart showing another example embodiment of all exemplary aspects;
- Fig. 13: a flowchart showing an example embodiment of a method according to the first exemplary aspect;
- Fig. 14: a flowchart showing an example embodiment of a method according to the second exemplary aspect;
- Fig. 15: a flowchart showing another example embodiment of the second exemplary aspect;
- Fig. 16: a flowchart showing another example embodiment of the first exemplary aspect; and
- Fig. 17: a schematic block diagram of an apparatus configured to perform the method according to the first exemplary aspect.

### DETAILED DESCRIPTION OF SOME EXEMPLARY EMBODIMENTS

The following description serves to deepen the understanding and shall be understood to complement and be read together with the description as provided in the above summary section of this specification.

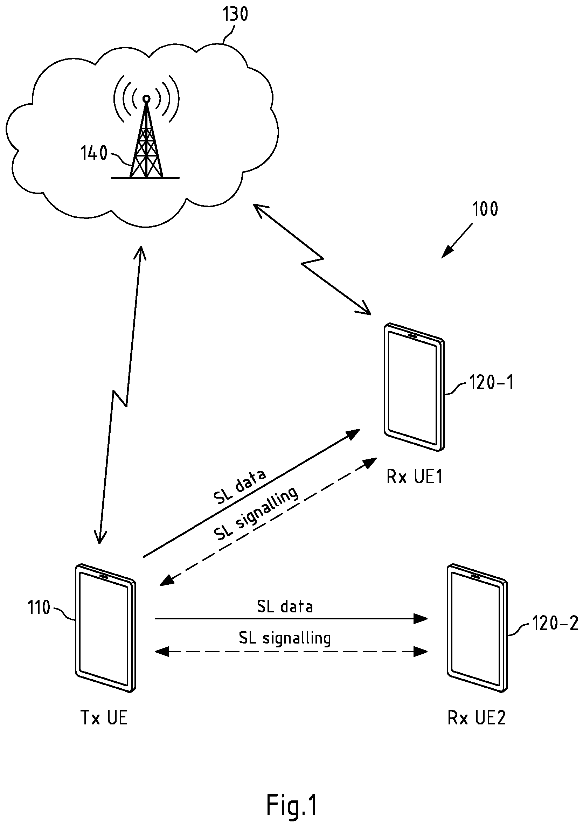

Fig. 1 is a schematic high-level block diagram of a system 100, as used by example embodiments according to all exemplary aspects. Fig. 1 illustrates a SL design principle of transmitting oriented one-to-many broadcast.

The system 100 comprises at least one Tx UE 110 (e.g. apparatus according to the second exemplary aspect) and at least one Rx UE (e.g. apparatus according to the first exemplary aspect), from which exemplary two Rx UEs 120-1 and 120-2 are shown. Tx UE 110 and Rx UEs 120-1 and 120-2 may be a respective mobile devices such as a cellular phone. Tx UE 110 and Rx UEs 120-1 and 120-2 may utilize a mobile communication network 130, e.g. comprising one or more base stations.

For enabling SL communication between the Tx UE 110 and Rx UEs 120-1 and 120-2, SL signaling may take place, e.g. a SCI may be provided from the Tx UE 110 to the Rx UEs 120-1 and 120-2 to inform the Rx UEs 120-1 and 120-2 of a SL resource pool that may be used for transmissions of data via SL. As illustrated by the arrows pointing from the Tx UE 110 to the Rx UEs 120-1 and 120-2, Tx UE 110 broadcasts SL data to both illustrated Rx UEs 120-1 and 120-2, e.g. using the one or more selected resources indicated in the SCI.

Further, system 100 comprises the mobile communication network 130 comprising one or more base stations, from which one base station 140 is exemplary shown. The Tx UE 110 and Rx UEs 120-1 and 120-2 may communicate with or via the mobile communication network 130.

The system 100 shows an architecture utilizable by example embodiments of all exemplary aspects. System 100 shows a general design principle of transmitted one-to-many broadcast.

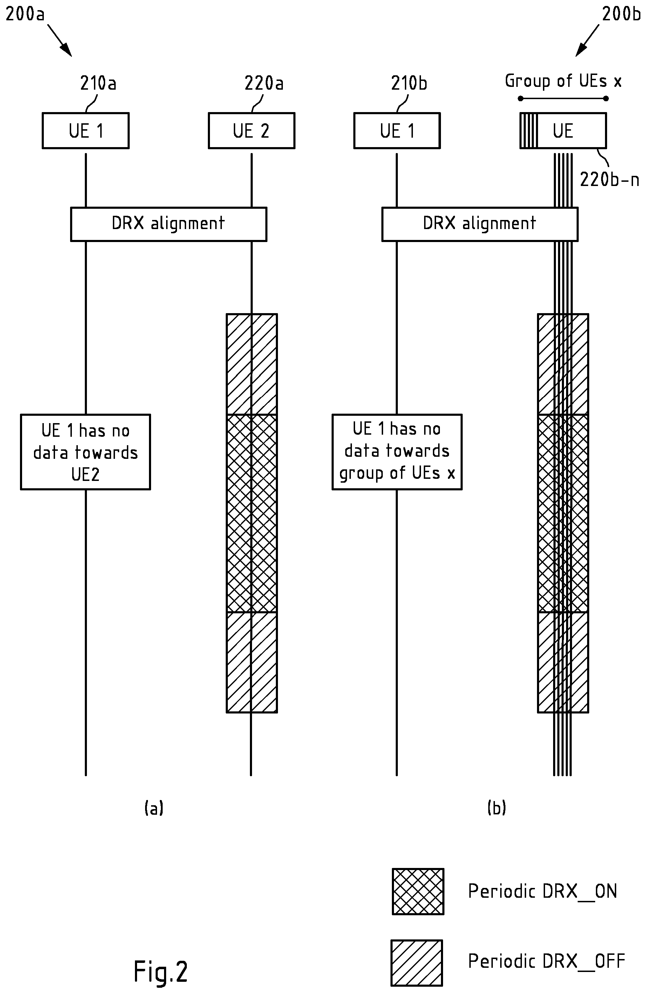

Fig. 2a, b show respective examples 200a, 200b of active SL DRX periods of a UE and a group of UEs, in which a transmitting UE1, 210a of Fig. 2a and 210b of Fig. 2b, do not have data to be transmitted to target UEs, e.g. SL Rx UE(s) - UE 2 220a of Fig. 2a respectively group of UEs 220b-n of Fig. 2b - in an upcoming active SL DRX period.

UE 1 and UE 2 are a communicating pair and UE 1 does not have any SL communication towards UE 2 during the UE 2's configured DRX_ON period (shown in Fig. 2a). The reason why the UE 2 transitions to DRX_ON even though there will be no transmission being sent during that period towards UE 2, is that the UE 2 does not know if there will be any transmission. The same applies to the group of UEs shown in Fig. 2b.

Further, Fig. 2a shows a unicast example. UE 2 is in DRX_ON period even though there will be no communications towards it. It may be assumed that (e.g. only) UE 1 would be the one performing a SL communication towards UE2.

In Fig. 2b, a broadcast/multicast example is shown. The group of UEs 220b-n entered respective DRX_ON periods even though there will be no broadcast/multicast towards the group. It may be assumed that (e.g. only) UE 1 210b would be the one performing the broadcast/multicast towards the group of UEs 220b-n.

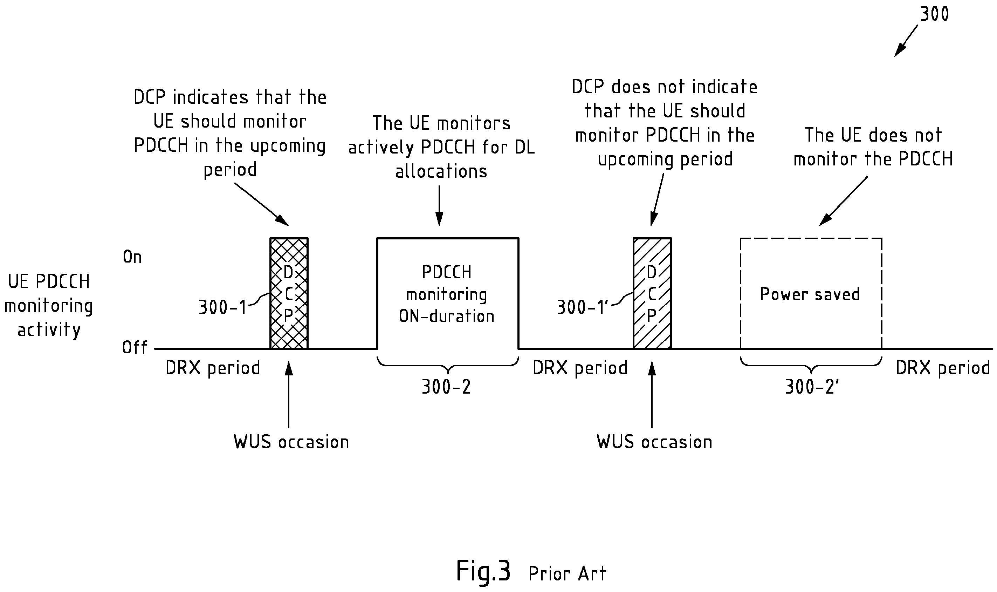

Fig. 3 shows an illustration of a Downlink Control Information (DCI) with Cyclic Redundancy Check (CRC) scrambled by Packet Switched-Radio Network Temporary Identifier (PS-RNTI) (DCP), used in a Uu interface of a mobile communication network. A respective SL Rx UE may monitor the PDCCH activity. Prior to the the start of a DRX_ON period, a DCP 300-1 may be monitored that may indicate that the UE should in addition monitor a respective PDCCH in an upcoming DRX_ON period. Such a DCP may represent a Wake-Up signal (WUS) occasion. In the upcoming DRX_ON period 300-2, the UE may monitor actively the PDCCH e.g. for downlink allocations.

In a next DRX_ON period shown at the right hand side of Fig. 3, the UE may monitor another DCP which does not indicate that the UE should monitor the PDCCH in the upcoming DRX_ON period. The DCP 300-1' represents a WUS occasion. The UE wakes up and monitors if data/traffic is allocated. The UE may then enter an inactive SL DRX period, DRX_OFF period to save power, as illustrated in Fig. 3 by the dashed block that is not monitored by the UE.

This requires that the UE at least monitors for the respective DCP and wakes up before every DRX_ON period.

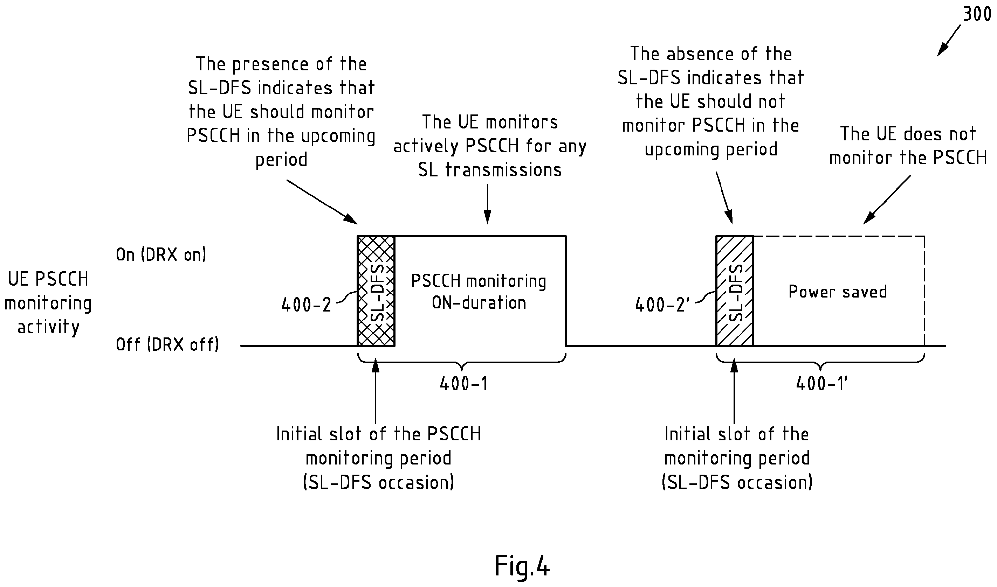

In contrast, in Fig. 4 it is shown an illustration 400 of an indication of an example embodiment according to all exemplary aspects.

The indication, e.g. SL-DFS 400-2 may be comprised as at least one symbol in an initial slot of a PSCCH monitoring period 400-1. A UE may monitor the PSCCH activity. The UE checks for the presence of the indication. For instance, if the checking leads to the indication (e.g. SL-DFS 400-2) being comprised by the at least one symbol, the presence of the indication may represent that the UE should monitor PSCCH in the current and/or upcoming active SL DRX, e.g. DRX_ON period(s). The UE may not enter an inactive state. The UE actively monitors PSCCH for any SL transmission.

On the right hand side of Fig. 4, a case is shown in which a UE may monitor the PSCCH activity. The UE checks for the presence of the indication. For instance, if the checking leads to such a SL-DFS 400-2 not being comprised, e.g. in the initial slot of the monitoring period 400-1', the absence of the indication (e.g. SL-DFS) may represent that the UE should not monitor PSCCH in the current and/or upcoming DRX_ON period(s). The UE may then (e.g. immediately) enter the inactive state during respectively in these DRX_ON periods. This allows the UE to directly save power by entering or transitioning to an inactive state in the DRX_ON period(s). Such a power saving effect is even bigger in case the indication further represents that the UE is not required to monitor PSCCH in one or more subsequent DRX_ON periods. Then, the UE is not required to wake up at all for DRX_ON periods, as indicated to the UE.

This is enabled by an introduction of the indication, e.g. SL-DFS, which can be transmitted either by a SL Tx UE (with a transmission towards the SL Rx UE) or by a base station (e.g. gNB; when the gNB gets indicated by the SL TX UEs that they have a transmission towards the SL Rx UE). Additionally, the indication may be a filtering signal. Such a filtering signal, e.g. SL-DFS may also inform the respective SL Rx UE for up to a maximum of configured number of subsequent DRX_ON periods, if the SL Tx UE has a planned transmission or has not a planned transmission. This may further enable the SL Tx UE to indicate to its peer UE(s) (one or more SL Rx UE(s)) that there will be or is no sidelink data/traffic intended to be transmitted in the next DRX_ON cycles (at least from the SL Tx UE or gNB).

A SL resource unit structure (e.g. a specific slot format), i.e. the arrangement of SL-DFS and symbols within a slot, may be defined that enables the introduction of the indication into at least one symbol, and optionally associated informative payload into the SL resource pool.

In other words, this enables a coexistence between devices that support the SL-DFS indication and legacy devices using or being in the same SL resource pool. Such a coexistence may be realized by a modification of the existing legacy PSCCH (by introducing a PSCCH format) carrying the 1st stage SCI that can embed a further indication from the SL Tx UE of the SL-DFS.

In contrast to the Wake-up signal shown in the example of Fig. 3, power saving mechanism in Uu is limited. Example embodiments of all exemplary aspect allow for increased sidelink power savings since a respective SL Rx UE does not need to monitor extra DCP-like occasions that may be outside the DRX_ON cycle. Such spent extra energy in order to monitor the indications on power saving which is detrimental to power saving. In addition, the sidelink UE does not need any extra low-complexity receiver circuitry in the frontend in order to detect a Wake-up signal-like sequence or signal, as is known from the prior art.

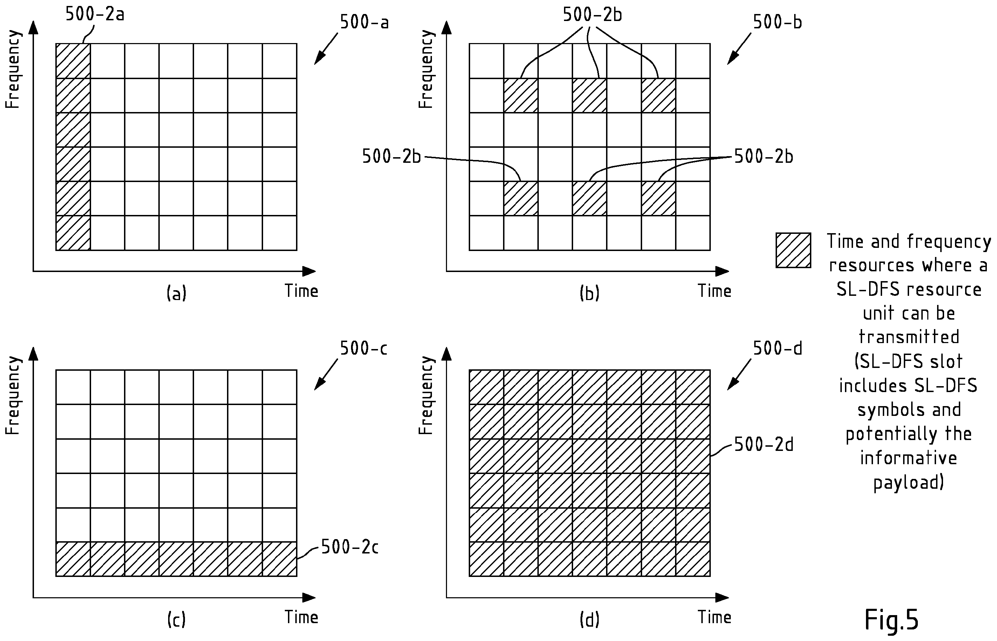

Fig. 5a-d show respective examples of potential SL resource pool configurations, as utilized by example embodiments according to all exemplary aspects.

As disclosed above, SL-DFS sequences may be transmitted within one or more symbols of a SL-DFS resource unit of a SL resource pool. Such a specific SL-DFS resource unit that is eligible for the transmission of the indication (e.g. SL-DFS) may be indicated in the RRC configuration associated with a SL resource pool. In Fig. 5a-d, examples of the respective effect of such a configuration are shown.

The four illustrative examples of Fig. 5a-d show how different SL-DFS resource units in a SL resource pool may be reserved or denoted as eligible for the transmission of the indication, e.g. with either the *"Symbol SL-DFS"* or *"Symbol SL-DFS with informative payload"* implementation, or both but in different SL-DFS resource units.

The filled resources (blocks 500-2a, 500-2b, 500-2c and 500-2d) mark time and frequency resources in which an indication (e.g. SL-DFS), e.g. comprised by a SL-DFS resource unit, can be transmitted. A respective SL-DFS slot may include or comprise at least one symbol comprising the indication, and potentially the informative payload.

Correspondingly, any potential SL Tx UE that wants to communicate via SL with a certain Rx UE may insert an indication (e.g. SL-DFS) using the SL-DFS resource unit and the corresponding sub-channel. This may allow concurrent wake-up signaling for different SL Rx UEs by means of Frequency Division Duplex (FDD). Also, Time Division Duplex (TDD) multiplexing may be possible, too, e.g. if there are not enough sub-channels available. This case is illustrated in Fig. 5c.

In another example, shown in Fig. 5b, the indication (e.g. SL-DFS) occurs with some periodicity in time, and may not be assigned with different sub-channels in the frequency domain. The configuration 500b of Fig. 5c enables additional power savings related to the detection of the SL-DFS resource unit, as in one realization of this configuration the respective indication (e.g. SL-DFS) may be constrained to be in certain parts of the frequency.

Finally, in the example of the configuration 500d shown in Fig. 5d, all SL-DFS resource units are eligible to take the role of SL-DFS resource unit in the SL resource pool.

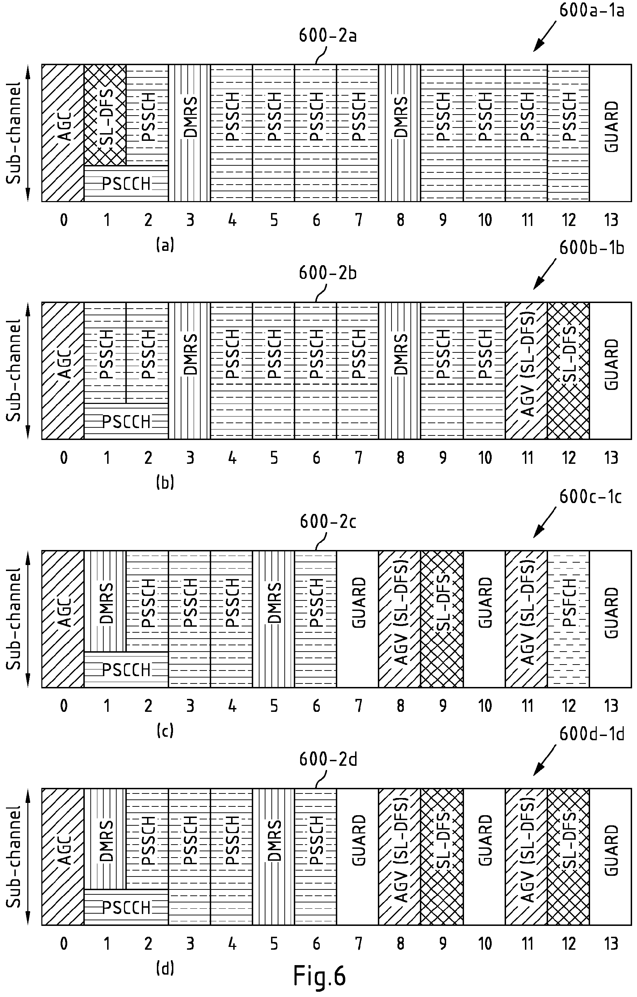

Fig. 6a-d show respective examples of SL-DFS resource units 600-1a, 600-1b, 600-1c, and 600-1d configured for respective transmission of symbols comprising the indication, as utilized by example embodiments according to all exemplary aspects.

The respective indications 600-2a, 600-2b, 600-2c, and 600-2d are shown in the Fig. 6a-d and are marked by *"SL-DFS".*

In Fig. 6a, a respective SL-DFS is transmitted in a first usable symbol of the SL-DFS resource unit. The indication (SL-DFS) spans a fraction of the sub-channel in transmission slot 1. In Fig. 6b, a respective SL-DFS is transmitted in the last usable symbol of the SL-DFS resource unit. In Fig. 6c, the SL-DFS is transmitted in the usable symbol preceding the symbol reserved for the PSFCH transmission and spans one sub-channel exactly. In Fig. 6d, multiple SL-DFSs are transmitted in a last usable symbol.

The respective SL-DFS (600-2a, 600-2b, 600-2c, and 600-2d) shown in Fig. 6a to 6d span one symbol exactly. It will be understood that such a SL-DFS as shown in Fig. 6a to 6d may also span two or more symbols of a respective SL-DFS resource unit.

The respective SL-DFS (600-2a, 600-2b, 600-2c, and 600-2d) shown in Fig. 6a to 6d span one sub-channel exactly, or a fraction of a sub-channel. It will be understood that such a SL-DFS as shown in Fig. 6a to 6d may also span two or more sub-channels, or a fraction thereof.

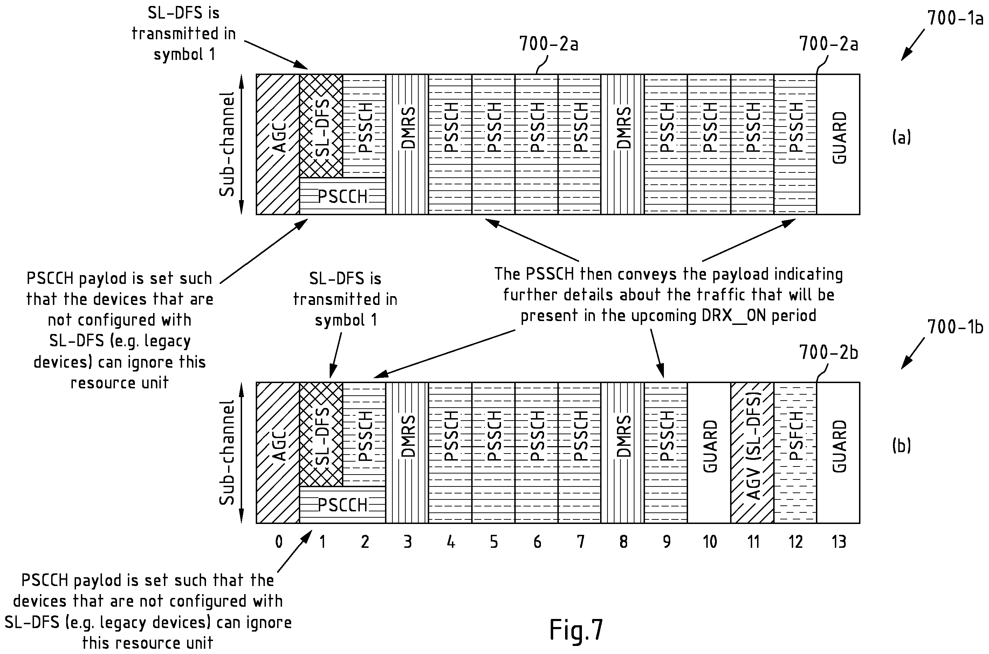

Fig. 7a, b show respective examples of different SL-DFS resource units: with PSFCH and without PSFCH.

In an example embodiment of Fig. 7a, a respective SL-DFS resource unit 700-1a without PSFCH is illustrated. In an example embodiment of Fig. 7b, a respective SL-DFS resource unit 700-1b with PSFCH is illustrated. The respective contents of the PSCCH payload may be such that UEs not configured with or by the indication (e.g. SL-DFS) or even legacy UEs are enabled to ignore the respective contents of the SL-DFS resource unit 700-1a and 700-1b. This may allow to ensure coexistence of SL-DFS enabled and non-enabled SL-DFS in the same SL resource pool used for transmitting the at least one symbol.

Further, to enable the coexistence with legacy UEs, it may be beneficial to use the field *"2nd-stage SCI format"* in the 1st stage SCI, since it may have two reserved code points. For instance, a respective UE may deal with reserved values in this field in that the UE will ignore the 2^{nd} stage SCI and PSSCH if the respective UE encounters a reserved value in that field.

PSCCH payload may be set such that the UEs (e.g. devices) that are not configured with SL-DFS (e.g. legacy UEs) can ignore the respective SL-DFS resource unit. The indication may be transmitted in symbol number 1, or another symbol e.g. at the beginning of a respective active SL DRX period (e.g. DRX_ON period). The PSSCH may then convey the respective informative payload indicating further details about the traffic, e.g. as further traffic activity information that may be present in a current and/or one or more subsequent active SL DRX periods.

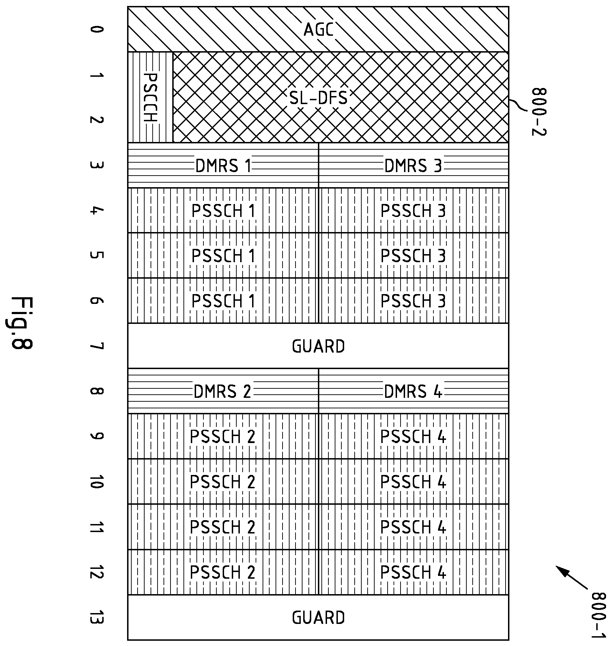

Fig. 8 shows an illustration of an example embodiment in which multiple informative payloads, with which an indication is associated, are multiplexed within a SL resource unit.

In an example embodiment, the different cyclic shifts and/or sequence indexes and/or or different ranges of cyclic shifts and/or sequence indexes of the SL-DFS 800-2 of the SL resource unit 800-1 (e.g. when assuming a Zadoff-Chu sequence, or similar orthogonalization when considering other sequences) can be mapped to different sub-resources within the SL resource unit. It is shown that PSSCH 1 and PSSCH 3 are multiplexed in the frequency domain, and that PSSCH 2 and PSSCH 4 are multiplexed in the frequency domain. Additionally, PSSCH 1 and PSSCH 2, and accordingly PSSCH 3 and PSSCH 4 are multiplexed in the time domain.

In Fig. 8, the indication (SL-DFS) 800-2 spans two transmission slots (slot 1 and 2) in contrast to the respective indications e.g. shown in Fig. 6 (e.g. Fig. 6a: SL-DFS - transmission slot 1) and Fig. 7 (e.g. Fig. 7a: SL-DFS - transmission slot 1).

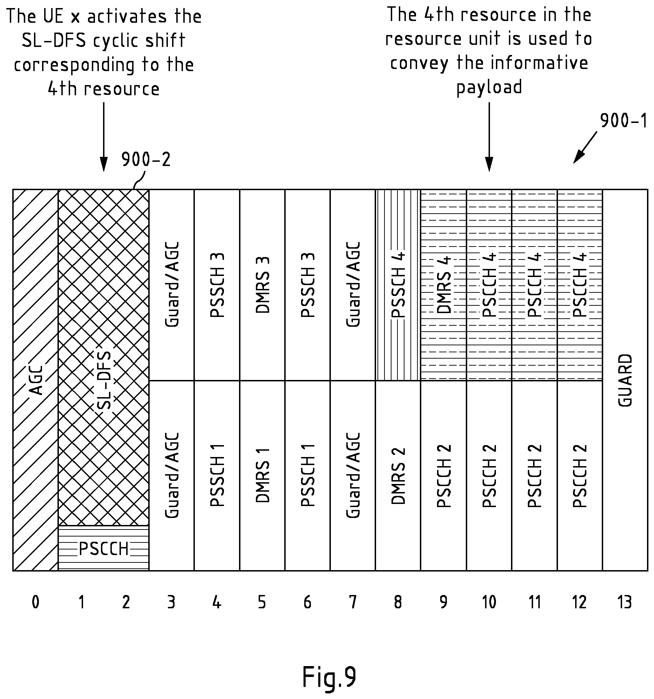

Fig. 9 shows an illustration of an example in which activation of one cyclic shift and/or sequence index is used so that the apparatus according to the first exemplary aspect may decode a certain sub-resource.

In the SL resource unit 900-1, an activation of one cyclic shift (or group of contiguous cyclic shifts) may indicate to the receiver (e.g. apparatus according to the first exemplary aspect) that it should decode the 4^{th} sub-resource. The indication 900-2 may activate the respective cyclic shift corresponding to the 4^{th} sub-resource, PSCCH 4. In this sub-resource, here PSCCH 4 and/or DMRS 4, informative payload associated with the indication 900-2 may be conveyed. Also, different sequence indexes (or group of contiguous sequence indexes) iso of different cyclic shifts (or group of contiguous cyclic shifts) may be assigned.

The shown different cyclic shifts of Fig. 8 and Fig. 9 and the associated sub-resources can either be dedicated to different SL Rx UEs or to different SL Tx UEs.

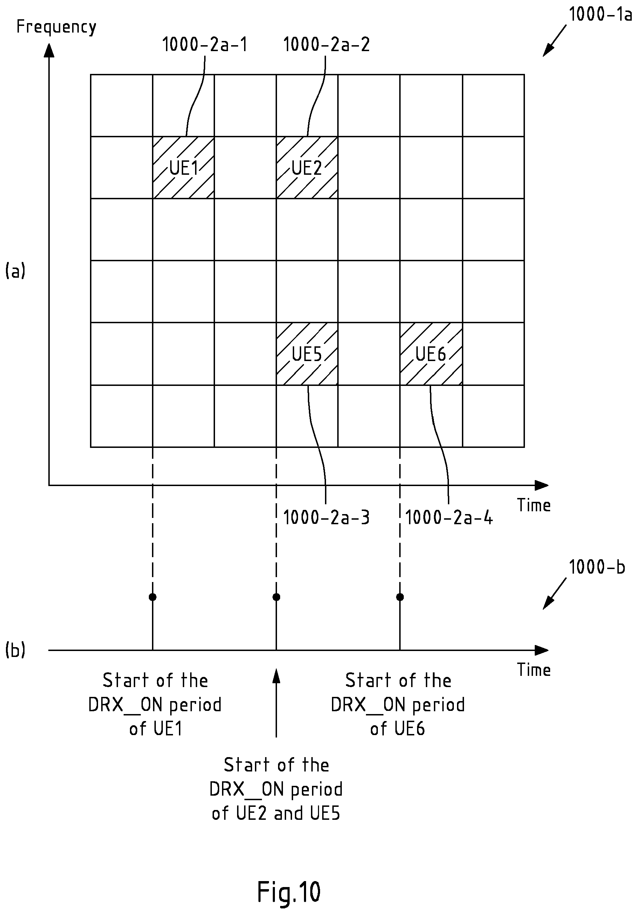

Fig. 10a, b show respective examples of a respective start of an active SL DRX period entered by an apparatus according to the first exemplary aspect of different UEs indicated in a SL-DFS resource unit.

In order to maximize energy savings, the indication or opportunity to monitor for SL data comprise a respective indication 1000-2a-1, 1000-2a-2, 1000-2a-3, and 1000-2a-4 in the at least one symbol should be very near the start of the active SL DRX period, or even better embedded in the first slot/resource unit of the corresponding active SL DRX period.

A respective start of the active SL DRX period is indicated in Fig. 10b below of Fig. 10a, wherein the active SL DRX period for UE 1 is the first in time, for UE 2 and UE5 it takes place simultaneously after the start of the active period for UE 1, and finally, the active SL DRX period of UE 6 starts.

The start of the DRX_ON period, as illustrated in Fig. 10b is aligned with the indication 1000-2a-1 for UE1, as is shown by the vertical dashed line connecting the respective transmission slot of Fig. 10a with the indication *"start of the DRX_ON period"* of Fig. 10b. Correspondingly, the start of the DRX_ON period of UE2 and UE5 is aligned with the respective transmission slot, shown in Fig. 10a. Also, the start of the DRX_ON period of UE6 is aligned with the respective transmission slot, shown in Fig. 10a.

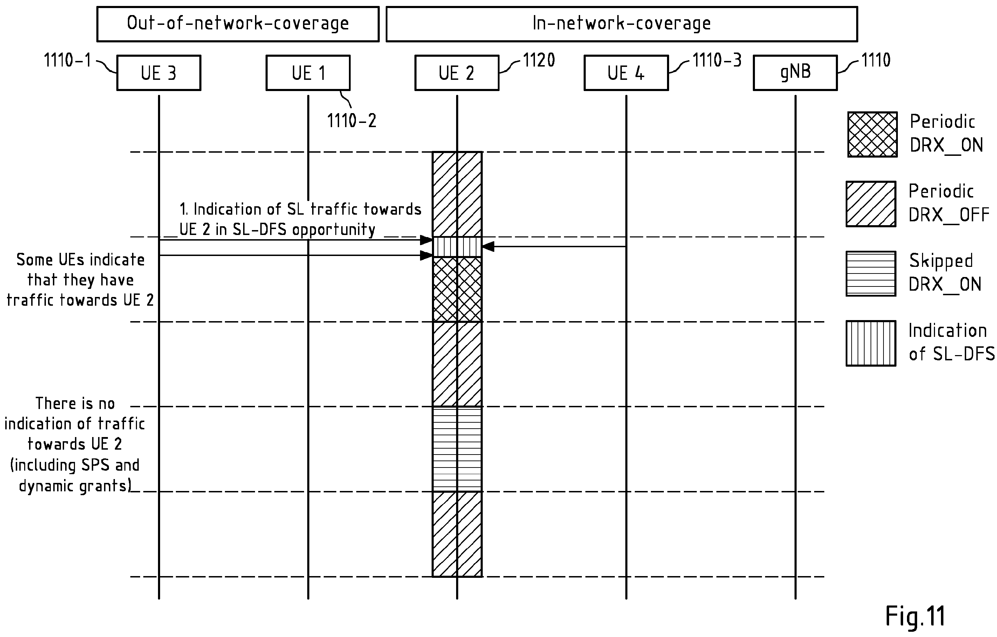

Fig. 11 shows a flowchart showing an example embodiment of all exemplary aspects. In the example embodiment, a respective SL-DFS is indicated by one or more peer SL Tx UEs (UE 3 1110-1, UE 1 1110-2 and UE 4 1110-3) to the SL Rx UE (UE 1 1120). In this setting:
- Out-of-network coverage SL Tx UEs (UE 3 1110-1, UE 1 1110-2) can send their indication over PC5 that they will have traffic in the upcoming DRX_ON period to the SL Rx UE (UE 2 1120), e.g. via agreed SL-DFS resource units (e.g. by a provided configuration).
- In-coverage UEs (UE 4 1110-3) can also send their SL-DFS indication directly to the intended SL Rx UE (UE 2 1120) in the same SL-DFS resource unit (or in another one dedicated to in coverage SL Tx UEs which can be potentially in another SL resource pool, but where the SL-DFS resource unit occurs at the same time as the SL-DFS resource unit in the SL resource pool for out-coverage UEs).
- For the target UE (UE 2 1120) to enter DRX_ON, at least one UE may signal that it has traffic to the target UE (UE 2 1120). No further signaling may be required.

To enable this, signals may be utilized such as such as Zadoff-Chu signal or sequence that may be overlapped in time and frequency and which may then allow the target UE (UE 2 1120) to perform non-coherent detection (e.g. energy detection).

For the case that there is an informative payload associated with the Zadoff-Chu signal or sequence and there are multiple SL Tx UEs performing the SL-DFS transmission, then PSCCH and/or corresponding informative payload may not be decodable. In this case, the respective (e.g. all) SL Rx UEs will still be able to detect a respective SL-DFS Zadoff-Chu part of the signal or sequence and therefore should transition to active monitoring in any case.

Respective DRX periods (a pattern of alternating DRX_ON periods (active SL DRX periods) and DRX_OFF periods (inactive SL DRX periods) of the respective apparatus according to the first exemplary aspect) of the UE 2 are shown as being comprised between the dashed lines. The indication in step 1 is sent at the beginning of the DRX_ON period (shown as the first DRX period). The indication is in the first transmission slot, which is illustrated by the small part shown that the beginning of the DRX_ON period. Since, here, UE 1 1110-2, UE 3 1110-1 and UE 4 1110-3 indicate to UE 2 1120 that there is SL data/traffic to be expected, after the indication, the UE 2 1120 is in DRX_ON (active SL DRX period of UE 2 1120) to monitor and optionally receive the SL data/traffic.

Further, after the following DRX_OFF period of the UE 2 1120 has lapsed, there is no indication received by UE 2 1120 in the next DRX_ON period of the UE 2, meaning there is no SL data/traffic to be expected for UE 2 1120. Thus, the next DRX_ON period is skipped by the UE 2 1120 entering an inactive state during the DRX_ON period of the UE 2 1120(skipped DRX_ON period). After the skipped DRX_ON period, the SL DRX pattern continues with the next DRX_OFF period of the UE 2 1120.

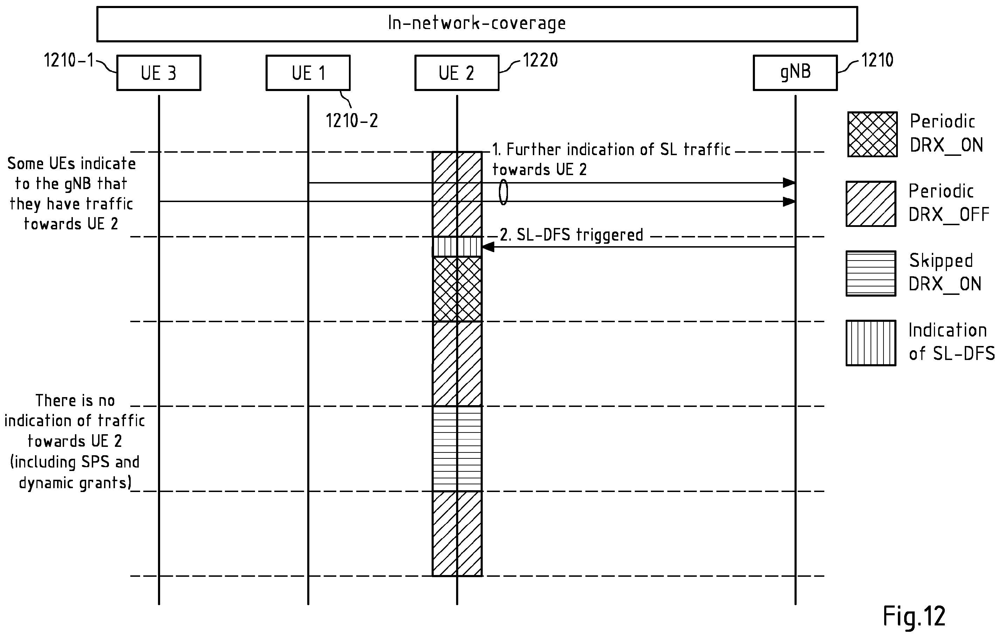

In an example embodiment illustrated in Fig. 12, a case in which the indication (e.g. SL-DFS) is indicated by the mobile communication network is shown. In this setting:
- The indication of SL-DFS may be sent by the mobile communication network, in particular by gNB 1210 upon having indication that the SL Rx UE (UE 2 1220) may receive at least one SL transmission in the upcoming DRX_ON period (step 1).
- The gNB 1210 may indicate the indication of SL-DFS as a reaction from another indication of SL data/traffic towards the SL Rx UE 1220, here UE 1 and UE 3 in step 2. The UE 2 1220 is in an active state to receive SL data/traffic in the DRX_ON period.
- When the gNB 1210 does not send the indication, then the UE (UE 2 1220) may assume that there is no SL data/traffic and may skip the current and/or one or more subsequent DRX_ON periods, as is shown by the illustrated skipped DRX_ON period of UE 2 1220 at the bottom of Fig. 12.

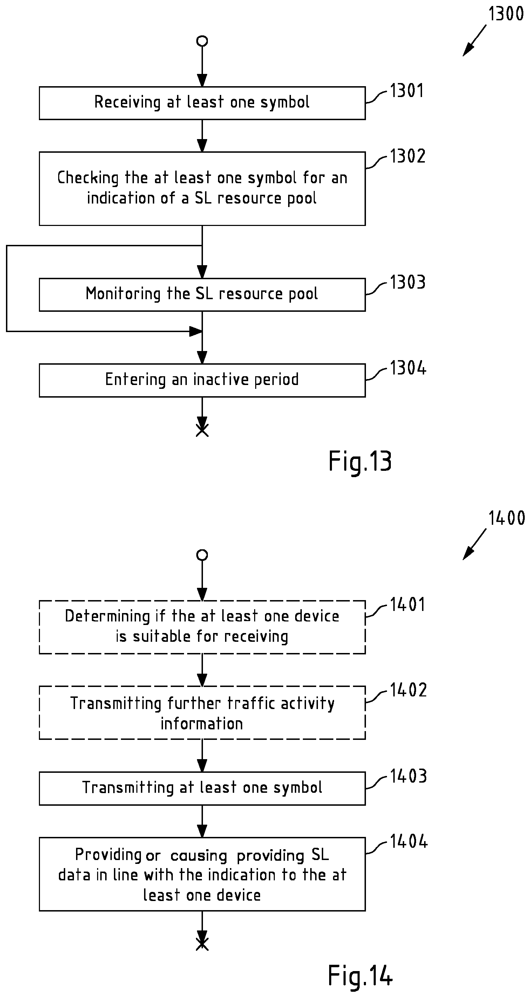

Fig. 13 is a flowchart 1300 showing an example embodiment of a method according to the first exemplary aspect. This flowchart 1300 may for instance be performed by a SL Rx UE, e.g. Rx UE1 120-1 and/or RX UE2 120-2 of Fig. 1

In a first step 1301, at least one symbol is received during a transmission slot of the SL resource pool. The at least one symbol may be received from a base station, or from a SL Tx UE e.g. performing and/or controlling the flowchart 1400 of Fig. 14.

In a second step 1302, the at least one symbol is checked for an indication. The indication may be a SL-DFS. The indication may indicate if SL data/traffic is expected to be received by the apparatus performing the flowchart 1300 (e.g. SL Rx UE) in its active SL DRX period and possibly one or more subsequent active SL DRX periods, e.g. from the SL Tx UE mentioned above. If the at least one symbol is not decodable, the SL Rx UE may enter or transition to the inactive state in the current active SL DRX period enabling to save power, step 1304.

In a third step 1303, if the at least one symbol is decodable, and the indication represents that SL data/traffic is expected to be received by the SL Rx UE, the SL Rx UE may monitor the SL resource pool for SL data reception in the active SL DRX period and possibly one or more subsequent SL DRX periods. Via the monitoring, e.g. SL data/traffic may be allocated to the apparatus performing and/or controlling the flowchart 1300. This apparatus may then receive the SL data/traffic accordingly. After the SL data/traffic is received, the SL Rx UE may still enter or transition to its inactive state in the active SL DRX period enabling to save power, step 1304. After the active SL DRX period, a next DRX_OFF period, e.g. as defined by a DRX pattern of the apparatus performing and/or controlling the flowchart 1300 may be entered.

Fig. 14 is a flowchart 1400 showing an example embodiment of a method according to the second exemplary aspect. This flowchart 1400 may for instance be performed by a SL Tx UE, e.g. Tx UE 110. Alternatively, this flowchart 1400 may be performed by a base station of a mobile communication network, e.g. base station 140 of Fig. 1.

In an optional first step 1401, it is determined if at least one device, e.g. a SL Rx UE performing and/or controlling the flowchart 1300 of Fig. 13 is suitable for receiving at least one symbol that may comprise an indication indicating that SL data/traffic can be expected to be received from the SL Tx UE. This determining may be done in conjunction with the mobile communication network that may have information whether a respective SL Rx UE is suitable to receive and decode at least one symbol comprising the indication.

In an optional second step 1402, further traffic activity information are transmitted, e.g. to the apparatus performing and/or controlling the flowchart 1300. Such further traffic activity information e.g. may be transmitted as an additional informative payload (e.g., by means of SCI, and/or PSSCH, and/or by using different cyclic shifts/root sequence indexes). For instance, such a further traffic activity information may be utilized to e.g. enable transmission or transmitting additional payload information related to a waking up of a recipient (e.g. apparatus according to the first exemplary aspect, e.g. apparatus performing flowchart 1300 of Fig. 13). Further, it may also be checked in conjunction with the mobile communication network that may have information whether a respective SL Rx UE is suitable to receive such an additional informative payload.

If the flowchart 1400 is performed by a respective base station, the determining and transmitting may be done directly with the mobile communication network. If the flowchart 1400 is performed by a respective SL Tx UE, signaling between a serving base station of the respective SL Tx UE may take place to gather one or more information in this regard from the mobile communication network.

In a third step 1403, the at least one symbol comprising the indication may be transmitted to a respective SL Rx UE.

In a fourth step 1404, SL data/traffic is transmitted or provided to the respective SL Rx UE in line with the indication. Thus, in case there is no SL data/traffic to be transmitted to the SL Rx UE, then, the at least one symbol transmitted in step 1403 may not comprise such an indication. It will be understood that then in step 1404 no SL data/traffic needs to be transmitted to the SL Rx UE, accordingly.

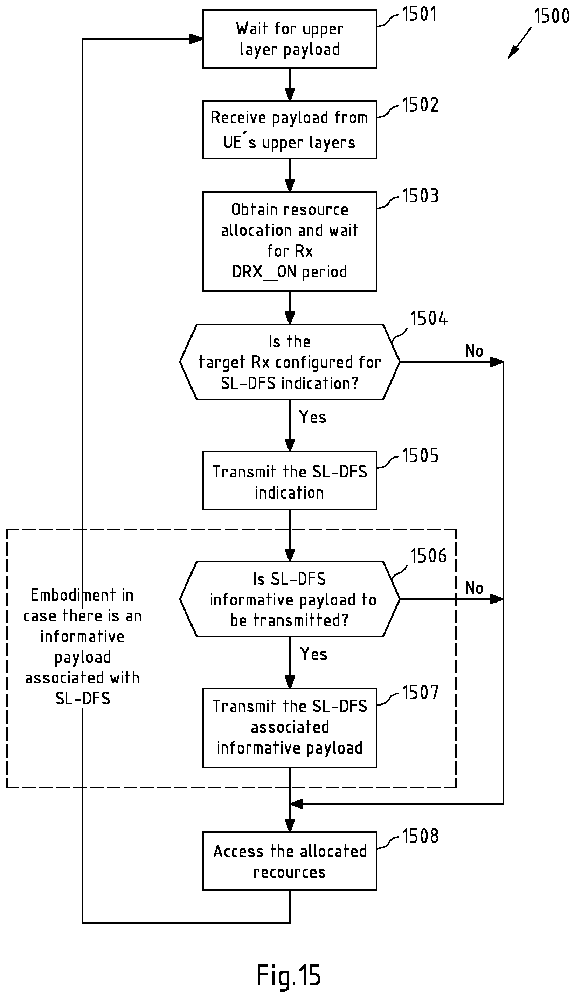

The behavior of a respective SL Tx UE (e.g. apparatus according to the second exemplary aspect) prior to initiating a transmission to a SL Rx UE is shown in the flowchart 1500 of Fig. 15. The respective SL Tx UE may be informed in a prior DRX alignment procedure of when its active SL DRX period (e.g. DRX_ON period) of the SL Rx UE as well as where the associated SL-DFS resource unit are. Further, the SL Tx UE may be informed if it is a (e.g. simple) indication of SL-DFS is to be transmitted or if an indication of SL-DFS associated with informative payload is to be transmitted.

The steps of the flowchart 1500 may be as follows:

| | |
|---|---|
| 1501: | The SL Tx UE waits for upper layer payload. |
| 1502: | The SL Tx UE receives payload from UE's upper layer(s). |
| 1503: | The SL Tx UE obtains resource allocation and waits for an active SL DRX period of a respective SL Rx UE. The sidelink resource allocation can either be Mode 1 or Mode 2. In the case of Mode 1, the transmission of the Buffer Status Report (BSR) may inform the mobile communication network that the SL Tx UE will be transmitting to a specific SL Rx UE(s) (e.g. in the case of unicast and groupcast). |
| 1504: | The SL Tx UE checks if the SL Rx UE (target Tx UE) supports or is configured for SL-DFS indication. |
| 1505: | If the checking of step 1504 was positive, the SL Tx UE transmits the SL-DFS indication. In principle, this may be done in both Mode 1 and Mode 2. The SL Tx UE may transmit the SL-DFS directly to the SL Rx UE (e.g. when assuming that knowledge of the SL-DFS has been acquired). In the case of Mode 1, the mobile communication network, e.g. a gNB, may also trigger the SL-DFS transmission (see Fig. 12). |
| 1506: | The SL Tx UE checks if there is SL-DFS informative payload to be transmitted. |
| 1507: | If the checking of step 1506 was positive, the SL Tx UE transmits the SL-DFS associated with informative payload. |
| 1508: | The SL Tx UE may then access the allocated resources to transmit the user payload received from the upper layer(s). |

Steps 1506 and 1507 may be comprised by example embodiments in case there is an informative payload associated with the indication of SL-DFS to be transmitted.

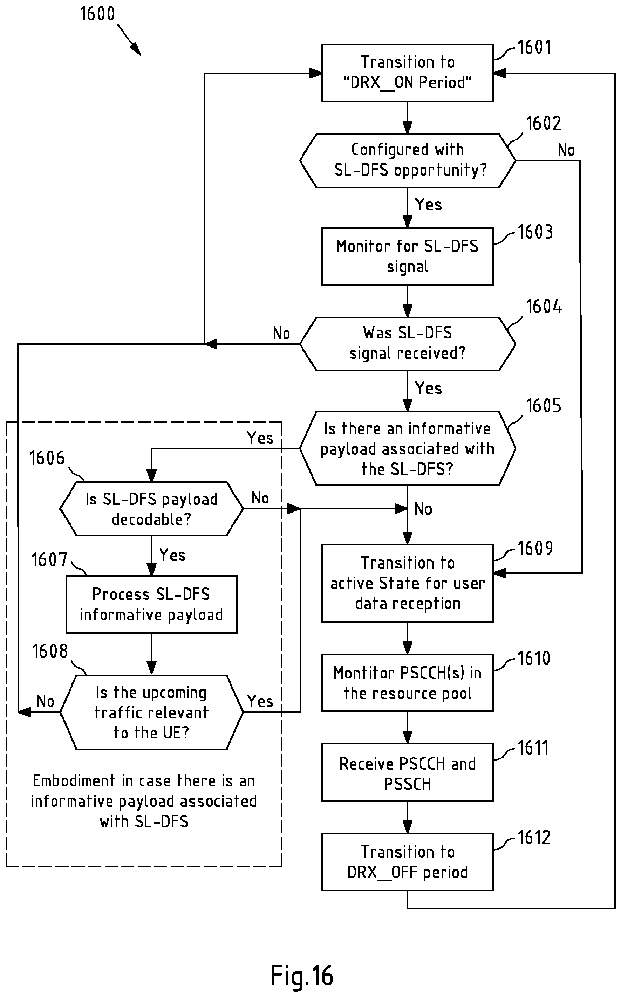

The behavior of the SL Rx UE (e.g. apparatus according to the second exemplary aspect) in connection with the reception of an indication of SL-DFS is shown in the flowchart 1600 of Fig. 16. Upon successful decoding of the indication (e.g. represented by a SL-DFS signal), the receiver (e.g. apparatus according to the second exemplary aspect) may be informed whether to skip or not to skip the next or one or more subsequent DRX_ON periods respectively cycles or a configured repetition of next upcoming DRX_ON cycles.

The steps of the flowchart 1600 may be as follows:

| | |
|---|---|
| 1601: | The SL Rx UE transitions into in an active SL DRX (e.g. DRX_ON) period. |
| 1602: | The SL Rx UE checks if it is configured with SL-DFS opportunity. Step 1602 may be performed before step 1601. |
| 1603: | If the checking of step 1602 was positive, the SL Rx UE monitors for the indication comprised by at least one symbol. The monitoring of the indication of SL-DFS may assume that either the mobile communication network may have configured the SL-DFS opportunity or the SL Rx UE may have selected autonomously its SL-DFS opportunity. Additionally, the indication may be sent either by a respective SL Tx UE (e.g. performing and/or controlling flowchart 1500 of Fig. 15) or by the mobile communication network. |
| 1604: | It is checked whether the indication (e.g. SL-DFS signal) is received. |
| 1605: | The SL Rx UE checks if there is an informative payload associated with the indication of SL-DFS. |
| | If the result of this checking is positive, steps 1606 to 1608 of the example embodiment of the indication being associated with informative payload may be performed. |
| 1606: | The SL Rx UE checks if the informative payload is decodable. If the informative payload is not decodable, it is continued with step 1609. |
| 1607: | If the informative payload is decodable, the SL Rx UE may process the informative payload. |
| 1608: | The SL Rx UE then checks if the upcoming traffic/data is relevant to the SL Rx UE. If the traffic/data is not relevant, the SL Rx UE may enter its inactive state, or it may check, e.g. in a next active DRX_ON period (step 1604) if another indication is received. |
| 1609: | The SL Rx UE transitions to or continues with an active state during the current active DRX_ON period and possibly one or more subsequent DRX_ON periods. |
| 1610: | The SL Rx UE monitors PSCCH(s) in the SL resource pool. |
| 1611: | The SL Rx UE receives PSCCH and PSSCH. |
| 1612: | The SL Rx UE enters or transitions to the inactive SL DRX (e.g. DRX_OFF) period. |

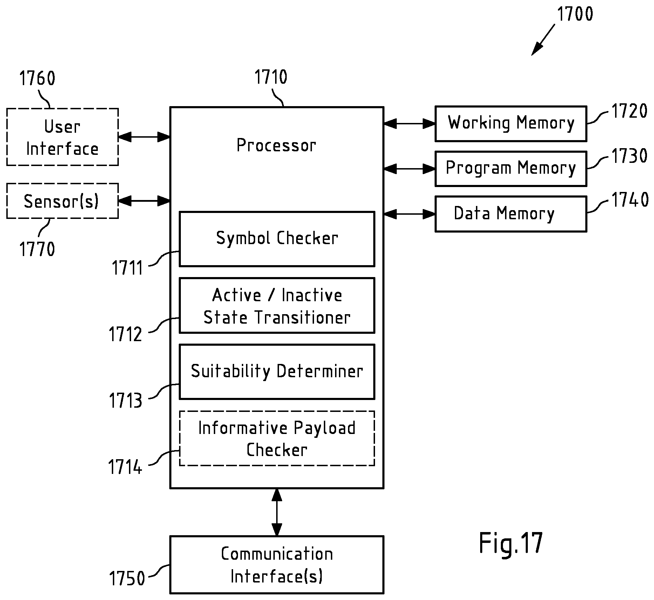

Fig. 17 is a schematic block diagram of an apparatus 1700 according to an exemplary aspect, which may for instance represent an apparatus according to the first exemplary aspect, e.g. a SL Rx UE, e.g. Rx UE1 120-1 and/or RX UE2 120-2 of Fig. 1. Alternatively, the apparatus 1700 may for instance represent an apparatus according to the second exemplary aspect, e.g. a SL Tx UE, e.g. Tx UE 110. Alternatively, the apparatus 1700 may for instance represent a base station of a mobile communication network, e.g. base station 140 of Fig. 1. In this case, e.g. sensor(s) 1770 may not be comprised by the apparatus 1700.

Apparatus 1700 comprises a processor 1710, working memory 1720, program memory 1730, data memory 1740, communication interface(s) 1750, an optional user interface 1760 and an optional sensor(s) 1770.

Apparatus 1700 may for instance be configured to perform and/or control or comprise respective means (at least one of 1710 to 1770) for performing and/or controlling the method according to the first and/or second exemplary aspects. Apparatus 1700 may as well constitute an apparatus comprising at least one processor (1710) and at least one memory (1720) including computer program code, the at least one memory and the computer program code configured to, with the at least one processor, cause an apparatus, e.g. apparatus 1700 at least to perform and/or control the method according to the first and/or second exemplary aspects.

Processor 1710 may for instance comprise a symbol checker 1711 as a functional and/or structural unit. Symbol Checker 1711 may for instance be configured to check at least one symbol for indication (see step 1302 of Fig. 13). Symbol checker 1711 may be comprised by the apparatus 1700 in case apparatus 1700 represents the SL Rx UE.

Processor 1710 may for instance comprise an active/inactive state transitioner 1712 as a functional and/or structural unit. Active/inactive state transitioner 1712 may for instance be configured to enter an active state and/or enter an inactive state in an active SL DRX period. Thus, by entering the inactive state, e.g. a part or whole of the transmit/receive circuitry and processors of the apparatus 1700 can be switched off or moved in standby/sleep mode (see step 1304 of Fig. 13). Active/inactive state transitioner 1712 may be comprised by the apparatus 1700 in case apparatus 1700 represents the SL Rx UE.

Processor 1710 may for instance comprise a suitability determiner 1713 as a functional and/or structural unit. Suitability determiner 1713 may for instance be configured to check if an indication may be decodable by a respective SL Rx UE (see step 1401 of Fig. 14). Suitability determiner 1713 may be comprised by the apparatus 1700 in case apparatus 1700 represents the SL Tx UE, or the base station of the mobile communication network.

Processor 1710 may for instance comprise an optional informative payload checker 1714 as a functional and/or structural unit. Informative payload checker 1714 may for instance be configured to determine if informative payload may be associated with the indication and is then decodable by a respective SL Rx UE (see step 1402 of Fig. 14). Informative payload checker may be utilized in case further traffic activity information may be transmitted to a SL Rx UE and the may be comprised by the apparatus 1700 in case apparatus 1700 represents the SL Tx UE, or the base station of the mobile communication network.

Processor 1710 may for instance further control the memories 1720 to 1740, the communication interface(s) 1750, the optional user interface 1760 and the optional sensor(s) 1770.

Processor 1710 may for instance execute computer program code stored in program memory 1730, which may for instance represent a computer readable storage medium comprising program code that, when executed by processor 1710, causes the processor 1710 to perform the method according to the first and/or second exemplary aspects.

Processor 1710 (and also any other processor mentioned in this specification) may be a processor of any suitable type. Processor 1710 may comprise but is not limited to one or more microprocessor(s), one or more processor(s) with accompanying one or more digital signal processor(s), one or more processor(s) without accompanying digital signal processor(s), one or more special-purpose computer chips, one or more field-programmable gate array(s) (FPGA(s)), one or more controller(s), one or more application-specific integrated circuit(s) (ASIC(s)), or one or more computer(s). The relevant structure/hardware has been programmed in such a way to carry out the described function. Processor 1710 may for instance be an application processor that runs an operating system.

Program memory 1730 may also be included into processor 1710. This memory may for instance be fixedly connected to processor 1710, or be at least partially removable from processor 1710, for instance in the form of a memory card or stick. Program memory 1730 may for instance be non-volatile memory. It may for instance be a FLASH memory (or a part thereof), any of a ROM, PROM, EPROM and EEPROM memory (or a part thereof) or a hard disc (or a part thereof), to name but a few examples. Program memory 1730 may also comprise an operating system for processor 1710. Program memory 1730 may also comprise a firmware for apparatus 1700.

Apparatus 1700 comprises a working memory 1720, for instance in the form of a volatile memory. It may for instance be a Random Access Memory (RAM) or Dynamic RAM (DRAM), to give but a few non-limiting examples. It may for instance be used by processor 1710 when executing an operating system and/or computer program.

Data memory 1740 may for instance be a non-volatile memory. It may for instance be a FLASH memory (or a part thereof), any of a ROM, PROM, EPROM and EEPROM memory (or a part thereof) or a hard disc (or a part thereof), to name but a few examples. Data memory 1740 may for instance one or more symbols, one or more indications, one or more configurations, SL data, or a combination thereof, to name but a few non-limiting examples.

Communication interface(s) 1750 enable apparatus 1700 to communicate with other entities, e.g. with base station, with SL Rx UE, and/or with SL Tx UE dependent on which apparatus is represented by the apparatus 1700. The communication interface(s) 1750 may for instance comprise a wireless interface, e.g. a cellular radio communication interface and/or a WLAN interface) and/or wire-bound interface, e.g. an IP-based interface, for instance to communicate with entities via the Internet.

User interface 1760 is optional and may comprise a display for displaying information to a user and/or an input device (e.g. a keyboard, keypad, touchpad, mouse, etc.) for receiving information from a user.

Sensor(s) 1770 are optional and may for instance comprise a barometric sensor, e.g. to gather pressure information.

Some or all of the components of the apparatus 1700 may for instance be connected via a bus. Some or all of the components of the apparatus 1700 may for instance be combined into one or more modules.

In the present specification, any presented connection in the described embodiments is to be understood in a way that the involved components are operationally coupled. Thus, the connections can be direct or indirect with any number or combination of intervening elements, and there may be merely a functional relationship between the components.

Moreover, any of the methods, processes and actions described or illustrated herein may be implemented using executable instructions in a general-purpose or special-purpose processor and stored on a computer-readable storage medium (e.g., disk, memory, or the like) to be executed by such a processor. References to a 'computer-readable storage medium' should be understood to encompass specialized circuits such as FPGAs, ASICs, signal processing devices, and other devices.

The expression "A and/or B" is considered to comprise any one of the following three scenarios: (i) A, (ii) B, (iii) A and B. Furthermore, the article "a" is not to be understood as "one", i.e. use of the expression "an element" does not preclude that also further elements are present. The term "comprising" is to be understood in an open sense, i.e. in a way that an object that "comprises an element A" may also comprise further elements in addition to element A.

It will be understood that all presented embodiments are only exemplary, and that any feature presented for a particular example embodiment may be used with any aspect of the invention on its own or in combination with any feature presented for the same or another particular example embodiment and/or in combination with any other feature not mentioned. In particular, the example embodiments presented in this specification shall also be understood to be disclosed in all possible combinations with each other, as far as it is technically reasonable and the example embodiments are not alternatives with respect to each other. It will further be understood that any feature presented for an example embodiment in a particular category (method/apparatus/computer program/system) may also be used in a corresponding manner in an example embodiment of any other category. It should also be understood that presence of a feature in the presented example embodiments shall not necessarily mean that this feature forms an essential feature of the invention and cannot be omitted or substituted.

The statement of a feature comprises at least one of the subsequently enumerated features is not mandatory in the way that the feature comprises all subsequently enumerated features, or at least one feature of the plurality of the subsequently enumerated features. Also, a selection of the enumerated features in any combination or a selection of only one of the enumerated features is possible. The specific combination of all subsequently enumerated features may as well be considered. Also, a plurality of only one of the enumerated features may be possible.

The sequence of all method steps presented above is not mandatory, also alternative sequences may be possible. Nevertheless, the specific sequence of method steps exemplarily shown in the figures shall be considered as one possible sequence of method steps for the respective embodiment described by the respective figure.

The invention has been described above by means of example embodiments. It should be noted that there are alternative ways and variations which are obvious to a skilled person in the art and can be implemented without deviating from the scope of the appended claims.

## Claims

1. An apparatus (120-1, 120-2) comprising:
- means for receiving (1301) at least one symbol in a transmission slot of a sidelink, SL, resource pool, wherein the at least one symbol is received in an active SL discontinuous reception, DRX, period of the apparatus (120-1, 120-2);
- means for checking (1302) the at least one symbol for an indication indicating if SL data is expected to be received by the apparatus (120-1, 120-2) in the active SL DRX period and possibly one or more subsequent active SL DRX periods of the apparatus (120-1, 120-2); and
- means for, based, at least in part, on the checking:
- if no indication is received, entering (1304) an inactive state in which the apparatus (120-1, 120-2) is not monitoring for any incoming allocations and/or transmissions in the active SL DRX period and possibly the one or more subsequent active SL DRX periods, or
- if the indication is received, monitoring (1303) the SL resource pool for SL data reception in the active SL DRX period and possibly the one or more subsequent active SL DRX periods.

2. The apparatus (120-1, 120-2) according to claim 1, wherein the transmission slot is configured with a slot format or a SL resource type, from which at least one particular symbol position in the transmission slot occupied by the at least one symbol is derived.

3. The apparatus (120-1, 120-2) according to claim 1 or 2, wherein the indication comprises a low-correlation or orthogonal sequence modulated over the at least one symbol.

4. The apparatus (120-1, 120-2) according to claim 3, wherein the indication spans a fraction of one sub-channel or one or more sub-channels of the SL resource pool in the frequency domain.

5. The apparatus (120-1, 120-2) according to any of the preceding claims, wherein a further indication is encoded into SL control information, SCI, of a Physical Sidelink Control Channel, PSCCH, or a Physical Sidelink Shared Channel, PSSCH, in the transmission slot, wherein the further indication enables the coexistence with devices not supporting the indication.

6. The apparatus (120-1, 120-2) according to any of the preceding claims, wherein one or more remaining symbols of the transmission slot convey further traffic activity information for the SL data that are expected to be received by the apparatus during the one or more subsequent active SL DRX periods.

7. The apparatus (120-1, 120-2) according to any of the preceding claims, wherein the indication is signaled at a start of the active SL DRX period.

8. The apparatus (120-1, 120-2) according to any of the preceding claims, wherein the apparatus is a user equipment, UE, being a target device of the SL data.

9. An apparatus (110) comprising:
- means for transmitting (1403) at least one symbol in a transmission slot of a sidelink, SL, resource pool, wherein the at least one symbol comprises an indication representing if SL data is expected to be transmitted to at least one device in an active SL discontinuous reception, DRX, period of the at least one device and possibly one or more subsequent active SL DRX periods of the at least one device, and wherein the at least one symbol is transmitted in the active SL DRX period; and
- means for providing (1404) or causing providing SL data in line with the indication to the at least one device.

10. The apparatus (110) according to claim 9, further comprising:
- means for determining (1401) if the at least one device is suitable for receiving the indication, wherein the at least one symbol is transmitted based, at least in part, on a result of the determining.

11. The apparatus (110) according to claim 9 or claim 10, further comprising:
- means for transmitting (1402) further traffic activity information for the SL data that are expected to be transmitted by the apparatus during the one or more subsequent active SL DRX periods in one or more remaining symbols of the transmission slot.

12. The apparatus (110) according to any of the claims 9 to 11, wherein the apparatus is a UE having a transmission towards the at least one device, or a base station of a mobile communication network having a transmission towards the at least one device or scheduling a SL transmission from another device towards the at least one device.

13. A method, comprising:
- receiving (1301) at least one symbol in a transmission slot of a sidelink, SL, resource pool,
wherein the at least one symbol is received in an active SL discontinuous reception, DRX, period of an apparatus (120-1, 120-2);
- checking (1302) the at least one symbol for an indication indicating if SL data is expected to be received by the apparatus (120-1, 120-2)in the active SL DRX period and possibly one or more subsequent active SL DRX periods of the apparatus (120-1, 120-2); and
- based, at least in part, on the checking:
- if no indication is received, entering (1304) an inactive state in which the apparatus (120-1, 120-2) is not monitoring for any incoming allocations and/or transmissions in the active SL DRX period and possibly the one or more subsequent active SL DRX periods, or
- if the indication is received, monitoring (1303) the SL resource pool for SL data reception in the active SL DRX period and possibly the one or more subsequent active SL DRX periods.

14. A method, comprising:
- transmitting (1403) at least one symbol in a transmission slot of a sidelink, SL, resource pool, wherein the at least one symbol comprises an indication representing if SL data is expected to be transmitted to at least one device in an active SL discontinuous reception, DRX, period of the at least one device and possibly one or more subsequent active SL DRX periods of the at least one device, and wherein the at least one symbol is transmitted in the active SL DRX period; and
- providing (1404) or causing providing SL data in line with the indication to the at least one device.

15. A system (100), comprising:
- at least one first apparatus (120-1, 120-2) according to any of the claims 1 to 8; and
- at least one second apparatus (110) according to any of the claims 9 to 12,
wherein the at least one first apparatus (120-1, 120-2) and the at least one second apparatus (110) are configured to perform the method according to claim 13 and the method according to claim 14 together.

## Patentansprüche

1. Einrichtung (120-1, 120-2), die Folgendes umfasst:
- Mittel zum Empfangen (1301) von mindestens einem Symbol in einem Übertragungsschlitz eines Sidelink(SL)-Ressourcenpools, wobei das mindestens eine Symbol in einer aktiven diskontinuierlichen SL-Empfangs(DRX)-Periode der Einrichtung (120-1, 120-2) empfangen wird;
- Mittel zum Prüfen (1302) des mindestens einen Symbols auf eine Anzeige, die anzeigt, ob erwartet wird, dass SL-Daten in der aktiven SL-DRX-Periode und möglicherweise einer oder mehreren nachfolgenden aktiven SL-DRX-Perioden der Einrichtung (120-1, 120-2) von der Einrichtung (120-1, 120-2) empfangen werden; und
- mindestens teilweise auf Basis des Prüfens Mittel für Folgendes:
- wenn keine Anzeige empfangen wird, Eintreten (1304) in einen Inaktivitätszustand, in dem die Einrichtung (120-1, 120-2) nicht auf eingehende Zuteilungen und/oder Übertragungen in der aktiven SL-DRX-Periode und möglicherweise der einen oder den mehreren nachfolgenden aktiven SL-DRX-Perioden überwacht, oder
- wenn die Anzeige empfangen wird, Überwachen (1303) des SL-Ressourcenpools auf einen SL-Datenempfang in der aktiven SL-DRX-Periode und möglicherweise der einen oder den mehreren nachfolgenden aktiven SL-DRX-Perioden.

2. Einrichtung (120-1, 120-2) nach Anspruch 1, wobei der Übertragungsschlitz mit einem Schlitzformat oder einer SL-Ressourcenart ausgelegt ist, aus dem bzw. der mindestens eine bestimmte Symbolposition im Übertragungsschlitz, die von dem mindestens einen Symbol belegt ist, abgeleitet wird.

3. Einrichtung (120-1, 120-2) nach Anspruch 1 oder 2, wobei die Anzeige eine Sequenz niedriger Korrelation oder eine orthogonale Sequenz umfasst, die über das mindestens eine Symbol moduliert wurde.

4. Einrichtung (120-1, 120-2) nach Anspruch 3, wobei die Anzeige einen Bruchteil von einem Unterkanal oder einem oder mehreren Unterkanälen des SL-Ressourcenpools in der Frequenzdomäne überspannt.

5. Einrichtung (120-1, 120-2) nach einem der vorhergehenden Ansprüche, wobei eine weitere Anzeige in SL-Steuerinformationen, SCI, eines physischen Sidelinksteuerkanals, PSCCH, oder eines gemeinsam verwendeten physischen Sidelinkkanals, PSSCH, im Übertragungsschlitz codiert ist, wobei die weitere Anzeige die Koexistenz mit Vorrichtungen ermöglicht, die die Anzeige nicht unterstützen.

6. Einrichtung (120-1, 120-2) nach einem der vorhergehenden Ansprüche, wobei ein oder mehrere verbleibende Symbole des Übertragungsschlitzes weitere Verkehrsaktivitätsinformationen für die SL-Daten übermitteln, von denen erwartet wird, dass sie von der Einrichtung während der einen oder der mehreren nachfolgenden aktiven SL-DRX-Perioden empfangen werden.

7. Einrichtung (120-1, 120-2) nach einem der vorhergehenden Ansprüche, wobei die Anzeige an einem Anfang der aktiven SL-DRX-Periode signalisiert wird.

8. Einrichtung (120-1, 120-2) nach einem der vorhergehenden Ansprüche, wobei die Einrichtung eine Teilnehmereinrichtung, UE, ist, die eine Zielvorrichtung der SL-Daten ist.

9. Einrichtung (110), die Folgendes umfasst:
- Mittel zum Übertragen (1403) von mindestens einem Symbol in einem Übertragungsschlitz eines Sidelink(SL)-Ressourcenpools, wobei das mindestens eine Symbol eine Anzeige umfasst, die repräsentiert, ob erwartet wird, dass SL-Daten in einer aktiven diskontinuierlichen SL-Empfangs(DRX)-Periode mindestens einer Vorrichtung und möglicherweise in einer oder mehreren nachfolgenden aktiven SL-DRX-Perioden der mindestens einen Vorrichtung zu der mindestens einen Vorrichtung übertragen werden, und wobei das mindestens eine Symbol in der aktiven SL-DRX-Periode übertragen wird; und
- Mittel zum Bereitstellen (1404) oder Veranlassen des Bereitstellens von SL-Daten zusammen mit der Anzeige für die mindestens eine Vorrichtung.

10. Einrichtung (110) nach Anspruch 9, die ferner Folgendes umfasst:
- Mittel zum Bestimmen (1401), ob die mindestens eine Vorrichtung für das Empfangen der Anzeige geeignet ist, wobei das mindestens eine Symbol mindestens teilweise auf Basis eines Ergebnisses des Bestimmens übertragen wird.

11. Einrichtung (110) nach Anspruch 9 oder Anspruch 10, die ferner Folgendes umfasst:
- Mittel zum Übertragen (1402) von weiteren Verkehrsaktivitätsinformationen für die SL-Daten, von denen erwartet wird, dass sie von der Einrichtung während der einen oder der mehreren nachfolgenden aktiven SL-DRX-Perioden in einem oder mehreren verbleibenden Symbolen des Übertragungsschlitzes übertragen werden.

12. Einrichtung (110) nach einem der Ansprüche 9 bis 11, wobei die Einrichtung eine UE ist, die eine Übertragung zu der mindestens einen Vorrichtung aufweist, oder eine Basisstation eines mobilen Kommunikationsnetzwerks ist, die eine Übertragung zu der mindestens einen Vorrichtung aufweist oder eine SL-Übertragung von einer anderen Vorrichtung zu der mindestens einen Vorrichtung plant.

13. Verfahren, das Folgendes umfasst:
- Empfangen (1301) von mindestens einem Symbol in einem Übertragungsschlitz eines Sidelink(SL)-Ressourcenpools, wobei das mindestens eine Symbol in einer aktiven diskontinuierlichen SL-Empfangs(DRX)-Periode einer Einrichtung (120-1, 120-2) empfangen wird;
- Prüfen (1302) des mindestens einen Symbols auf eine Anzeige, die anzeigt, ob erwartet wird, dass SL-Daten in der aktiven SL-DRX-Periode und möglicherweise einer oder mehreren nachfolgenden aktiven SL-DRX-Perioden der Einrichtung (120-1, 120-2) von der Einrichtung (120-1, 120-2) empfangen werden; und
- mindestens teilweise auf Basis des Prüfens:
- wenn keine Anzeige empfangen wird, Eintreten (1304) in einen Inaktivitätszustand, in dem die Einrichtung (120-1, 120-2) nicht auf eingehende Zuteilungen und/oder Übertragungen in der aktiven SL-DRX-Periode und möglicherweise der einen oder den mehreren nachfolgenden aktiven SL-DRX-Perioden überwacht, oder
- wenn die Anzeige empfangen wird, Überwachen (1303) des SL-Ressourcenpools auf einen SL-Datenempfang in der aktiven SL-DRX-Periode und möglicherweise der einen oder den mehreren nachfolgenden aktiven SL-DRX-Perioden.

14. Verfahren, das Folgendes umfasst:
- Übertragen (1403) von mindestens einem Symbol in einem Übertragungsschlitz eines Sidelink(SL)-Ressourcenpools, wobei das mindestens eine Symbol eine Anzeige umfasst, die repräsentiert, ob erwartet wird, dass SL-Daten in einer aktiven diskontinuierlichen SL-Empfangs(DRX)-Periode mindestens einer Vorrichtung und möglicherweise in einer oder mehreren nachfolgenden aktiven SL-DRX-Perioden der mindestens einen Vorrichtung zu der mindestens einen Vorrichtung übertragen werden, und wobei das mindestens eine Symbol in der aktiven SL-DRX-Periode übertragen wird; und
- Bereitstellen (1404) oder Veranlassen des Bereitstellens von SL-Daten zusammen mit der Anzeige für die mindestens eine Vorrichtung.

15. System (100), das Folgendes umfasst:
- mindestens eine erste Einrichtung (120-1, 120-2) nach einem der Ansprüche 1 bis 8; und
- mindestens eine zweite Einrichtung (110) nach einem der Ansprüche 9 bis 12,
wobei die mindestens eine erste Einrichtung (120-1, 120-2) und die mindestens eine zweite Einrichtung (110) dazu ausgelegt sind, das Verfahren nach Anspruch 13 und das Verfahren nach Anspruch 14 zusammen durchzuführen.

## Revendications

1. Appareil (120-1, 120-2) comprenant :
- des moyens pour recevoir (1301) au moins un symbole dans un créneau de transmission d'une réserve de ressources de liaison latérale, SL, dans lequel l'au moins un symbole est reçu dans une période de réception discontinue SL, DRX, active de l'appareil (120-1, 120-2) ;
- des moyens pour vérifier (1302) dans l'au moins un symbole une indication précisant si l'on attend la réception de données SL par l'appareil (120-1, 120-2) dans la période DRX SL active et éventuellement une ou plusieurs périodes DRX SL actives ultérieures de l'appareil (120-1, 120-2) ; et
- des moyens pour, en se basant au moins en partie sur la vérification :
- si aucune indication n'est reçue, entrer (1304) dans un état inactif dans lequel l'appareil (120-1, 120-2) ne surveille aucune allocation et/ou transmission entrante dans la période DRX SL active, et éventuellement les une ou plusieurs périodes DRX SL actives ultérieures, ou
- si l'indication est reçue, surveiller (1303) la réserve de ressources SL pour la réception de données SL dans la période DRX SL active, et éventuellement les une ou plusieurs périodes DRX SL actives ultérieures.

2. Appareil (120-1, 120-2) selon la revendication 1, dans lequel le créneau de transmission est configuré avec un format de créneau ou un type de ressource SL à partir duquel au moins une position de symbole particulière dans le créneau de transmission occupé par l'au moins un symbole est dérivée.

3. Appareil (120-1, 120-2) selon la revendication 1 ou 2, dans lequel l'indication comprend une séquence à faible corrélation ou orthogonale modulée sur l'au moins un symbole.

4. Appareil (120-1, 120-2) selon la revendication 3, dans lequel l'indication couvre une fraction d'un sous-canal ou d'un ou plusieurs sous-canaux de la réserve de ressources SL dans le domaine fréquentiel.

5. Appareil (120-1, 120-2) selon l'une des revendications précédentes, dans lequel une indication supplémentaire est codée dans des informations de contrôle SL, SCI, d'un canal physique de contrôle de liaison latérale, PSCCH, ou d'un canal physique partagé de liaison latérale, PSSCH, dans le créneau de transmission, dans lequel l'indication supplémentaire permet la coexistence avec des dispositifs ne prenant pas en charge l'indication.

6. Appareil (120-1, 120-2) selon l'une des revendications précédentes, dans lequel un ou plusieurs symboles restants du créneau de transmission transportent des informations d'activité de trafic supplémentaires pour les données SL dont la réception est attendue par l'appareil au cours des une ou plusieurs périodes DRX SL actives ultérieures.

7. Appareil (120-1, 120-2) selon l'une des revendications précédentes, dans lequel l'indication est signalée au début de la période DRX SL active.

8. Appareil (120-1, 120-2) selon l'une des revendications précédentes, dans lequel l'appareil est un équipement utilisateur, UE, qui est un dispositif cible des données SL.

9. Appareil (110) comprenant :
- des moyens pour transmettre (1403) au moins un symbole dans un créneau de transmission d'une réserve de ressources de liaison latérale, SL, dans lequel l'au moins un symbole comprend une indication précisant si l'on attend la transmission de données SL à au moins un dispositif dans une période de réception discontinue SL, DRX, active de l'au moins un dispositif, et éventuellement une ou plusieurs périodes DRX SL actives ultérieures de l'au moins un dispositif, et dans lequel l'au moins un symbole est transmis dans la période DRX SL active ; et
- des moyens pour fournir (1404) ou provoquer la fourniture de données SL conformément à l'indication à l'au moins un dispositif.

10. Appareil (110) selon la revendication 9, comprenant en outre :
- des moyens pour déterminer (1401) si l'au moins un dispositif convient à la réception de l'indication, dans lequel l'au moins un symbole est transmis en se basant au moins en partie sur un résultat de la détermination.

11. Appareil (110) selon la revendication 9 ou 10, comprenant en outre :
- des moyens pour transmettre (1402) des informations d'activité de trafic supplémentaires pour les données SL dont la transmission est attendue par l'appareil au cours des une ou plusieurs périodes DRX SL actives ultérieures dans un ou plusieurs symboles restants du créneau de transmission.

12. Appareil (110) selon l'une des revendications 9 à 11, dans lequel l'appareil est un UE ayant une transmission vers l'au moins un dispositif, ou une station de base d'un réseau de communication mobile ayant une transmission vers l'au moins un dispositif ou planifiant une transmission SL depuis un autre dispositif vers l'au moins un dispositif.

13. Procédé, comprenant les étapes suivantes :
- recevoir (1301) au moins un symbole dans un créneau de transmission d'une réserve de ressources de liaison latérale, SL, dans lequel l'au moins un symbole est reçu dans une période de réception discontinue SL, DRX, active d'un appareil (120-1, 120-2) ;
- vérifier (1302) dans l'au moins un symbole une indication précisant si l'on attend la réception de données SL par l'appareil (120-1, 120-2) dans la période DRX SL active et éventuellement une ou plusieurs périodes DRX SL actives ultérieures de l'appareil (120-1, 120-2) ; et
- en se basant au moins en partie sur la vérification :
- si aucune indication n'est reçue, entrer (1304) dans un état inactif dans lequel l'appareil (120-1, 120-2) ne surveille aucune allocation et/ou transmission entrante dans la période DRX SL active, et éventuellement les une ou plusieurs périodes DRX SL actives ultérieures, ou
- si l'indication est reçue, surveiller (1303) la réserve de ressources SL pour la réception de données SL dans la période DRX SL active, et éventuellement les une ou plusieurs périodes DRX SL actives ultérieures.

14. Procédé, comprenant les étapes suivantes :
- transmettre (1403) au moins un symbole dans un créneau de transmission d'une réserve de ressources de liaison latérale, SL, dans lequel l'au moins un symbole comprend une indication précisant si l'on attend la transmission de données SL à au moins un dispositif dans une période de réception discontinue SL, DRX, active de l'au moins un dispositif, et éventuellement une ou plusieurs périodes DRX SL actives ultérieures de l'au moins un dispositif, et dans lequel l'au moins un symbole est transmis dans la période DRX SL active ; et
- fournir (1404) ou provoquer la fourniture de données SL conformément à l'indication à l'au moins un dispositif.

15. Système (100), comprenant :
- au moins un premier appareil (120-1, 120-2) selon l'une des revendications 1 à 8 ; et
- au moins un deuxième appareil (110) selon l'une des revendications 9 à 12,
dans lequel l'au moins un premier appareil (120-1, 120-2) et l'au moins un deuxième appareil (110) sont configurées pour mettre en œuvre le procédé selon la revendication 13 ainsi que le procédé selon la revendication 14.
